# EUROPEAN PATENT APPLICATION

(11) **EP 4 664 342 A1**
(43) Date of publication of application: **17.12.2025**
(21) Application number: 25182007.2
(22) Date of filing: 11.06.2025
(51) Int. Cl.: G06F 30/18, G06F 30/27, G06F 111/12, G06F 113/14, G06F 113/16

(54) **PLANT DIAGRAM UNIFICATION SYSTEM, PLANT DIAGRAM UNIFICATION METHOD, AND PLANT DIAGRAM UNIFICATION PROGRAM**

(30) Priority: 13.06.2024 JP 2024095846
(71) Applicant: Yokogawa Electric Corporation, Tokyo 180-8750 (JP)
(72) Inventor: TSUBOTA, Ichiro, Musashino-shi, Tokyo, 180-8750, (JP); OKUYAMA, Shin, Musashino-shi, Tokyo, 180-8750, (JP); YOKOYAMA, Ryusuke, Musashino-shi, Tokyo, 180-8750, (JP); MATSUDA, Takaaki, Musashino-shi, Tokyo, 180-8750, (JP)
(74) Representative: Winter, Brandl - Partnerschaft mbB

(57) **Abstract**

A plant diagram unification system (100-1, 100-2) defines a unified object that unifies different display modes of objects of same type, acquires a plant diagram that is used for construction, operation, and maintenance of a plant, detects an object that is included in the acquired plant diagram, replaces a detected object with the unified object, and generates an object unified diagram in which the display modes of the objects of the same type are unified.

## Description

### FIELD

The present invention relates to a plant diagram unification system, a plant diagram unification method, and a plant diagram unification program.

### BACKGROUND

As a diagram (appropriately referred to as a "plant diagram") that is used for construction, operation, and maintenance of a plant, a building diagram, a layout diagram, a Piping and Instrument Diagram (P&ID: a pipe instrumentation diagram), an Elementary Control wiring Diagram (ECWD: an expanded connection diagram), an Interlock Block Diagram (IBD), a single line diagram, a soft logic diagram, or the like is known. For example, a plant administrator (a plant operator or a system user) uses a P&ID in which symbols and lines are drawn as objects. At this time, the objects that are included in the P&ID may have different display modes, such as shapes, sizes, or colors, depending on a created time, a created country, a creator, or the like of the P&ID even when the objects are of the same type (see, for example, Japanese Laid-open Patent Publication No. 2019-040380).

However, in the technology as described above, it is difficult to easily unify the objects that are displayed in the plant diagram. For example, in the technology as described above, it is difficult to unify, as objects, display modes of symbols that represent plant devices or the like and lines that represent pipes or the like, which are included in a plurality of P&IDs.

The present invention has been conceived in view of the foregoing situations, and an object of the present invention is to easily unify objects that are displayed in a plant diagram.

### SUMMARY

According to an aspect of the embodiments, A plant diagram unification system includes a definition unit that defines a unified object that unifies different display modes of objects of same type, an acquisition unit that acquires a diagram that is used for construction, operation, and maintenance of a plant, a detection unit that detects an object that is included in the diagram, and a generation unit that replaces a detected object with the unified object, and generates an object unified diagram in which the display modes of the objects of the same type are unified.

According to an aspect of the embodiments, a plant diagram unification method that is implemented by a computer, the plant diagram unification method includes defining a unified object that unifies different display modes of objects of same type, acquiring a diagram that is used for construction, operation, and maintenance of a plant, detecting an object that is included in the diagram, replacing a detected object with the unified object, and generating an object unified diagram in which the display modes of the objects of the same type are unified.

According to an aspect of the embodiments, a plant diagram unification program that causes a computer to execute a process, the process includes defining a unified object that unifies different display modes of objects of same type, acquiring a diagram that is used for construction, operation, and maintenance of a plant, detecting an object that is included in the diagram, replacing a detected object with the unified object, and generating an object unified diagram in which the display modes of the objects of the same type are unified.

### BRIEF DESCRIPTION OF THE DRAWINGS

FIG. 1 is a diagram illustrating a configuration example and a process example of a plant diagram unification system according to a first embodiment;
FIG. 2 is a block diagram illustrating a configuration example of each of apparatuses of the plant diagram unification system according to the first embodiment;
FIG. 3 is a diagram illustrating an example of a symbol definition information storage unit of a server apparatus according to the first embodiment;
FIG. 4 is a diagram illustrating an example of a plant diagram information storage unit of the server apparatus according to the first embodiment;
FIG. 5 is a diagram illustrating an example of a symbol pattern information storage unit of the server apparatus according to the first embodiment;
FIG. 6 is a diagram illustrating an example of a symbol detection information storage unit of the server apparatus according to the first embodiment;
FIG. 7 is a diagram illustrating an example of a symbol unification information storage unit of the server apparatus according to the first embodiment;
FIG. 8 is a diagram illustrating an example of a detection model storage unit of the server apparatus according to the first embodiment;
FIG. 9 is a diagram illustrating a first specific example of a display screen of a plant administrator terminal according to the first embodiment;
FIG. 10 is a diagram illustrating a second specific example of the display screen of the plant administrator terminal according to the first embodiment;
FIG. 11 is a diagram illustrating a third specific example of the display screen of the plant administrator terminal according to the first embodiment;
FIG. 12 is a diagram illustrating a fourth specific example of the display screen of the plant administrator terminal according to the first embodiment the plant administrator terminal;
FIG. 13 is a sequence diagram illustrating an example of the flow of an entire process that is performed by the plant diagram unification system according to the first embodiment;
FIG. 14 is a diagram illustrating a configuration example and a process example of a plant diagram unification system according to a second embodiment;
FIG. 15 is a block diagram illustrating a configuration example of each of apparatuses of the plant diagram unification system according to the second embodiment;
FIG. 16 is a diagram illustrating an example of a line definition information storage unit of a server apparatus according to the second embodiment;
FIG. 17 is a diagram illustrating an example of a line pattern information storage unit of the server apparatus according to the second embodiment;
FIG. 18 is a diagram illustrating an example of a line detection information storage unit 14 of the server apparatus according to the second embodiment;
FIG. 19 is a diagram illustrating an example of a line unification information storage unit of the server apparatus according to the second embodiment;
FIG. 20 is a diagram illustrating a first specific example of a display screen of a plant administrator terminal according to the second embodiment;
FIG. 21 is a diagram illustrating a second specific example of the display screen of the plant administrator terminal according to the second embodiment;
FIG. 22 is a diagram illustrating a third specific example of the display screen of the plant administrator terminal according to the second embodiment;
FIG. 23 is a diagram illustrating a fourth specific example of the display screen of the plant administrator terminal according to the second embodiment;
FIG. 24 is a sequence diagram illustrating an example of the flow of an entire process that is performed by the plant diagram unification system according to the second embodiment; and
FIG. 25 is a diagram illustrating a hardware configuration example according to one embodiment.

### DETAILED DESCRIPTION OF THE PREFERRED EMBODIMENTS

A plant diagram unification system, a plant diagram unification method, and a plant diagram unification program according to a first embodiment and a second embodiment of the present invention will be described in detail below with reference to the drawings. Meanwhile, the present invention is not limited by the embodiments described below.

### First embodiment

A configuration and a process of a plant diagram unification system 100-1 according to the first embodiment, a configuration and a process of each of apparatuses of the plant diagram unification system 100-1, the flow of processes performed by the plant diagram unification system 100-1 will be first described in sequence, and effects of the first embodiment will be lastly described. Meanwhile, in the first embodiment, the plant diagram unification system 100-1 that unifies display modes of symbols as objects of a plant diagram will be described as one example, but objects and fields of use are not specifically limited.

### 1. Configuration and process of plant diagram unification system 100-1

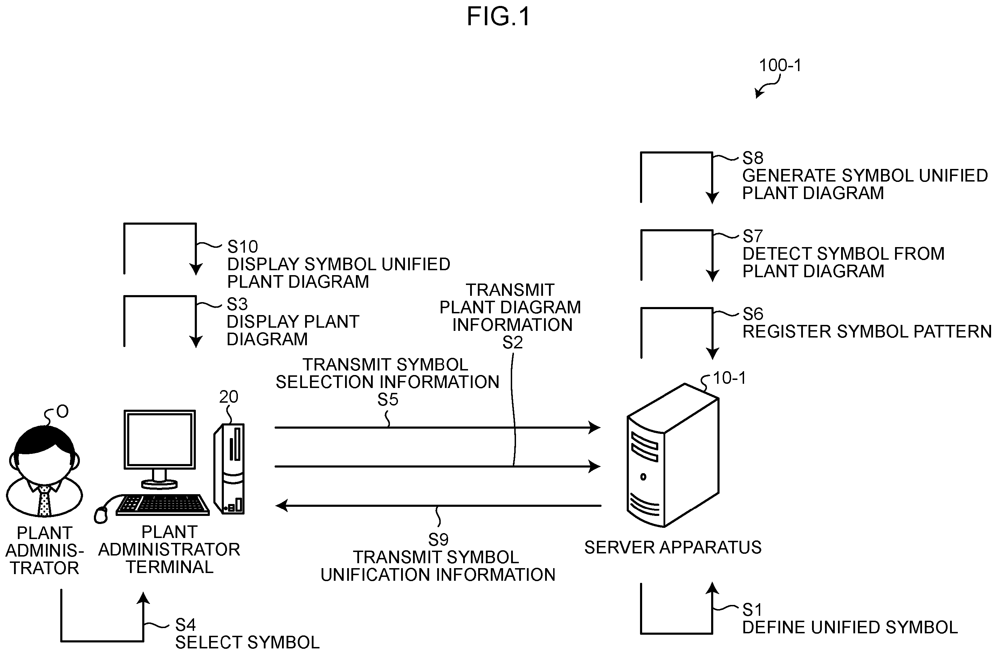

A configuration and a process of the plant diagram unification system 100-1 according to the first embodiment will be described in detail below with reference to FIG. 1. FIG. 1 is a diagram illustrating a configuration example and a process example of the plant diagram unification system 100-1 according to the first embodiment. In the following, a configuration example of the entire plant diagram unification system 100-1, a process example of the plant diagram unification system 100-1, and effects of the plant diagram unification system 100-1 will be described.

### 1-1. Configuration example of entire plant diagram unification system 100-1

A configuration example of the entire plant diagram unification system 100-1 according to the first embodiment will be described. The plant diagram unification system 100-1 includes a server apparatus 10-1 that is a plant diagram unification apparatus and a plant administrator terminal 20 that is used by a plant administrator O. Here, the server apparatus 10-1 and the plant administrator terminal 20 are communicably connected to each other in a wired or wireless manner via a predetermined communication network (not illustrated). Meanwhile, as the predetermined communication network, various kinds of communication networks, such as the Internet and a dedicated line, may be adopted. Further, the plant diagram unification system 100-1 illustrated in FIG. 1 may include the plurality of server apparatuses 10-1 or the plurality of plant administrator terminals 20.

### 1-2. Process example of entire plant diagram unification system 100-1

A process example of the entire plant diagram unification system 100-1 according to the first embodiment will be described. Meanwhile, processes from Step S1 to Step S10 below may be performed in a different order. Further, some of the processes from Step S1 to Step S10 below may be omitted.

### 1-2-1. Unified symbol definition process

Firstly, the server apparatus 10-1 defines a unified symbol (Step S1). For example, the server apparatus 10-1 acquires, from the plant administrator terminal 20, unified symbol definition information that includes a unified symbol that is defined for each of symbols by the plant administrator O and a plurality of ununified symbols that are associated with the unified symbol, and stores the unified symbol definition information.

### 1-2-2. Plant diagram information transmission process

Secondly, the plant administrator terminal 20 transmits plant diagram information to the server apparatus 10-1 (Step S2). For example, the plant administrator terminal 20 transmits the plant diagram information that is selected by operation performed by the plant administrator O to the server apparatus 10-1. At this time, the server apparatus 10-1 acquires and stores the plant diagram information.

Here, a plant diagram is a diagram that is used for construction, operation, and maintenance of a plant, and is, for example, a building diagram, a layout diagram, a P&ID, an ECWD, an IBD, a single line diagram, a soft logic diagram, or the like that is generated with digital data.

### 1-2-3. Plant diagram display process

Thirdly, the plant administrator terminal 20 displays the plant diagram (Step S3). For example, the plant administrator terminal 20 displays, on a monitor screen, the plant diagram that is selected by operation performed by the plant administrator O.

### 1-2-4. Symbol selection process

Fourthly, the plant administrator O selects a symbol by operating the plant administrator terminal 20 (Step S4). For example, the plant administrator O selects a symbol of a control device by performing click operation on the symbol of control device in the plant diagram that is displayed on the monitor screen of the plant administrator terminal 20.

Here, the symbol is a sign that represents a component of the plant and that is displayed in the plant diagram. Further, the component of the plant is a plant device (for example: a control device, a communication device, or a measurement device), a plant facility (for example: a tank, a pump, or a furnace), or the like that is included in the plant.

At this time, the plant administrator O may select a part of symbols that are included in the plant diagram or select all of the symbols by operating the plant administrator terminal 20. Specifically, when symbols in a specific range in the plant diagram are to be unified, the plant administrator O selects the specific range in the plant diagram that is displayed on the monitor screen of the plant administrator terminal 20. In contrast, when symbols in the entire range of the plant diagram are to be unified, the plant administrator O selects the entire range of the plant diagram that is displayed on the monitor screen of the plant administrator terminal 20. Furthermore, when symbols that are included in a plurality of plant diagrams are to be unified, the plant administrator O selects a specific range or an entire range of each of the plant diagrams that are displayed on the monitor screen of the plant administrator terminal 20.

### 1-2-5. Symbol selection information transmission process

Fifthly, the plant administrator terminal 20 transmits symbol selection information to the server apparatus 10-1 (Step S5). For example, the plant administrator terminal 20 transmits identification information on a symbol of a control device that is selected by the plant administrator O or location information in the plant diagram to the server apparatus 10-1.

### 1-2-6. Symbol pattern registration process

Sixthly, the server apparatus 10-1 registers a symbol pattern (Step S6). For example, the server apparatus 10-1 acquires the plant diagram information based on the symbol selection information that is received from the plant administrator terminal 20, and identifies a symbol pattern from digital data of a symbol of a corresponding control device. At this time, the server apparatus 10-1 stores the identified symbol pattern as symbol pattern information.

Here, the symbol pattern is identification information for identifying a display mode of a symbol that is an object, and is, for example, a shape (a figure or a line style), a size, a color, or the like of the symbol. Further, the symbol pattern may include identification information for identifying the display mode, such as orientation (angle) of the symbol, presence or absence of text that belongs to the symbol, or a symbol display form (for example: lighting on the monitor screen or a color is changed) of the symbol.

### 1-2-7. Symbol detection process

Seventhly, the server apparatus 10-1 detects a symbol from the plant diagram (Step S7). For example, the server apparatus 10-1 searches through the acquired plant diagram information and detects a symbol that coincides with the identified symbol pattern. At this time, the server apparatus 10-1 generates and stores symbol detection information that includes a symbol detection diagram that is a plant diagram in which the detected symbol is colored and displayed in a highlighted manner. Further, the server apparatus 10-1 generates and stores the symbol detection information that includes a symbol detection list in which detected symbols are listed.

### 1-2-8. Symbol unified plant diagram generation process

Eighthly, the server apparatus 10-1 generates a symbol unified plant diagram from the detection result (Step S8). For example, the server apparatus 10-1 replaces an ununified symbol among the detected symbols with a unified symbol, generates symbol unification information that includes the symbol unified plant diagram in which symbols are unified, and stores the symbol unification information. At this time, when the unified symbol deviates from a different symbol or a line, the server apparatus 10-1 changes a location relationship among the unified symbol, the different symbol, the different line, and the like, and adjusts objects in the symbol unified plant diagram. Further, the server apparatus 10-1 generates and stores the symbol unification information that includes a symbol change history that represents a history of replacement of an ununified symbol with a unified symbol.

The server apparatus 10-1 may detect a symbol by using a detection model DM that is a machine learning model, and notify the plant administrator O of a detection error, such as a detection failure or a false positive, when the symbol detection information includes the detection error.

### 1-2-9. Symbol unification information transmission process

Ninthly, the server apparatus 10-1 transmits the symbol unification information to the plant administrator terminal 20 (Step S9). For example, the server apparatus 10-1 transmits the symbol unification information that includes the generated symbol unified plant diagram and the generated symbol change history to the plant administrator terminal 20.

### 1-2-10. Symbol unified plant diagram display process

Tenthly, the plant administrator terminal 20 displays the symbol unified plant diagram (Step S10). For example, the plant administrator terminal 20 displays, on the monitor screen, the symbol unified plant diagram in which symbols of control devices are unified. Further, the plant administrator terminal 20 displays, on the monitor screen, the symbol change history in which the symbols of the control devices are unified.

### 1-2-11. Others

The server apparatus 10-1 may input the generated symbol unified plant diagram to a digital twin, construct a three-dimensional model of the plant, and provide the constructed three-dimensional model to the plant administrator O.

### 1-3. Effects of entire plant diagram unification system 100-1

In the following, a background of the plant diagram, an overview and a problem with a reference technology, and effects of the plant diagram unification system 100-1 will be described in this order.

### 1-3-1. Background of plant diagram

In recent years, a technology related to a plant is attracting attention. For example, the software market in the international plant engineering is expanding year by year, and is expected to expand further. A plant diagram, such as a building diagram, a layout diagram, a P&ID, or an IBD, of a plant is used for construction, operation, and maintenance of the plant.

A historical background of the plant diagram will be described below by taking a P&ID that is a plant diagram as an example. Firstly, in the introduction period and the popularization period of the plant diagram, a paper P&ID has been used, and, in the following period, a P&ID that is generated with digital data by two-dimensional Computer Aided Design (CAD) has been used. Subsequently, an intelligent P&ID to which tag information or the like on a plant device is added has been used, and, in the future, a next-generation intelligent P&ID that is a more efficient plant diagram is expected to be used. In recent years, the P&ID is migrated from the paper P&ID and the P&ID based on two-dimensional CAD to the intelligent P&ID.

In construction, operation, and maintenance of a plant, it is needed to generate a list of devices and pipes that are described in the plant diagram, such as a building diagram, a layout diagram, a P&ID, or an IBD. However, for example, when the plant diagram is a P&ID that is drawn by two-dimensional CAD, an engineer or the like needs to visually detect symbols and lines of devices and pipes from the plant diagram, which is inefficient and may lead to a human error.

To cope with this, there is a need for a technology that enables to register a desired pattern from among a plurality of objects that are included in the plant diagram that is used for construction, operation, and maintenance of a plant, detect all of objects that coincide with a shape or the like of the registered pattern from the plant diagram, and collectively unify objects to an arbitrary object when the objects are not unified among a plurality of plant diagrams.

### 1-3-2. Overview of reference technology

An overview of a reference technology related to a plant diagram will be described below. The reference technology is a technology that, when a plurality of User Interface (UI) objects overlap with one another in a UI edit screen, displays a list of the plurality of overlapping UI objects in the UI edit screen in accordance with predetermined operation. Further, the reference technology is a technology that unifies positions or shapes of the plurality of UI objects in the list with respect to the UI objects, upon receiving input of operation of unifying the positions or the shapes from a plurality of users in the list.

### 1-3-3. Problem with reference technology

However, in the reference technology, there is a problem in that it is difficult to unify display modes of symbols, which represent plant devices or the like, and lines, which represent pipes or the like, that are included in a plurality of P&IDs, in a P&ID that includes objects that are of the same type but that have different display modes, such as shapes, sizes, or colors, depending on a created time, a created country, a creator, or the like.

### 1-3-4. Overview of plant diagram unification system 100-1

The plant diagram unification system 100-1 includes the server apparatus 10-1 that is a plant diagram unification apparatus and the plant administrator terminal 20 that is used by the plant administrator O. First, the server apparatus 10-1 acquires, from the plant administrator terminal 20, the unified symbol definition information that includes a unified symbol that is defined for each of symbols by the plant administrator O and a plurality of ununified symbols that are associated with the unified symbol, and stores the unified symbol definition information. Subsequently, the server apparatus 10-1 detects a symbol that coincides with the symbol pattern from among all of symbols that are included in the plant diagram, based on the symbol pattern of the selected symbol. Further, the server apparatus 10-1 generates the symbol unified plant diagram and the symbol change history, in which an ununified symbol among detected symbols is replaced with the unified symbol. Furthermore, the server apparatus 10-1 may input the generated symbol unified plant diagram to a digital twin and construct a three-dimensional model of the plant.

### 1-3-5. Effects

In the plant diagram unification system 100-1, it is possible to efficiently detect a symbol from a plant diagram that is used for construction, operation, and maintenance of a plant, generate the symbol unified plant diagram in which ununified symbols in a plurality of plant diagrams are collectively replaced with unified symbols, and provide the symbol unified plant diagram to a user of the plant diagram, such as the plant administrator O, a plant engineer, a plant contractor, or a plant designer. Further, in the plant diagram unification system 100-1, by inputting the generated symbol unified plant diagram to a digital twin, it is possible to improve accuracy of a three-dimensional model of the plant.

As described above, the plant diagram unification system 100-1 is able to easily unify symbols as objects of the plant diagram, so that it is expected to contribute to development of a plant related technology for which the market is expanding.

### 2. Configuration and process of each of apparatuses in plant diagram unification system 100-1

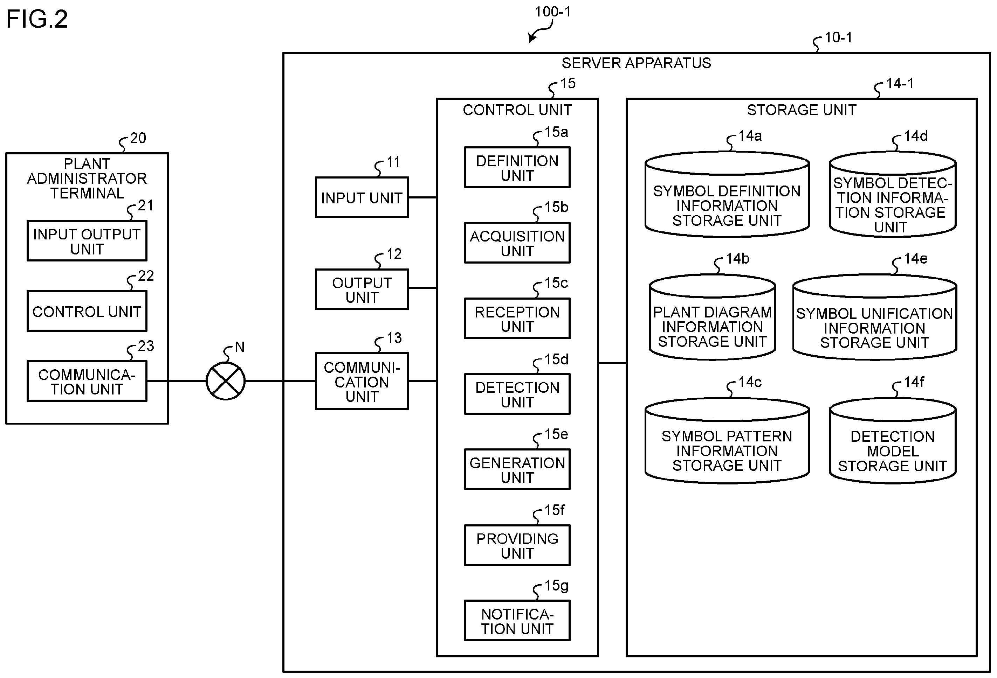

With reference to FIG. 2 to FIG. 8, a configuration example and a process example of each of the apparatuses that are included in the plant diagram unification system 100-1 illustrated in FIG. 1 will be described. In the following, a configuration example of the entire plant diagram unification system 100-1 according to the first embodiment will be first described, and configuration examples and process examples of the server apparatus 10-1 and the plant administrator terminal 20 will be subsequently described in detail.

### 2-1. Configuration example of entire plant diagram unification system 100-1

A configuration example of the entire plant diagram unification system 100-1 illustrated in FIG. 1 will be described below with reference to FIG. 2. FIG. 2 is a block diagram illustrating a configuration example of each of the apparatuses that are included in the plant diagram unification system 100-1 according to the first embodiment. As illustrated in FIG. 2, the plant diagram unification system 100-1 includes the server apparatus 10-1 that is a plant diagram unification apparatus and the plant administrator terminal 20 that is a user terminal. The server apparatus 10-1 is communicably connected to the plant administrator terminal 20 by a communication network N that is implemented by the Internet, a dedicated line, or the like. Further, the server apparatus 10-1 is installed in a cloud environment, an on-premise environment, an edge environment, or the like.

### 2-2. Configuration example and process example of server apparatus 10-1

A configuration example and a process example of the server apparatus 10-1 illustrated in FIG. 1 will be described below with reference to FIG. 2. The server apparatus 10-1 includes an input unit 11, an output unit 12, a communication unit 13, a storage unit 14, and a control unit 15. In the following, the configuration example and the process example of the server apparatus 10-1 will be described; however, the plant administrator terminal 20 is able to perform the same process. In other words, the plant diagram unification system 100-1 may be implemented by only the plant administrator terminal 20.

### 2-2-1. Input unit 11

The input unit 11 controls input of various kinds of information to the server apparatus 10-1. For example, the input unit 11 is implemented by a mouse, a keyboard, or the like, and receives input of various kinds of information to the server apparatus 10-1.

### 2-2-2. Output unit 12

The output unit 12 controls output of various kinds of information from the server apparatus 10-1. For example, the output unit 12 is implemented by a display or the like, and outputs various kinds of information that are stored in the server apparatus 10-1.

### 2-2-3. Communication unit 13

The communication unit 13 controls data communication with a different apparatus. For example, the communication unit 13 performs data communication with each of communication apparatuses via a router or the like. Further, the communication unit 13 is able to perform data communication with an operator terminal (not illustrated).

### 2-2-4. Storage unit 14

The storage unit 14 stores therein various kinds of information that are referred to when the control unit 15 operates or various kinds of information that are acquired when the control unit 15 operates. The storage unit 14 includes a symbol definition information storage unit 14a, a plant diagram information storage unit 14b, a symbol pattern information storage unit 14c, a symbol detection information storage unit 14d, a symbol unification information storage unit 14e, and a detection model storage unit 14f. Here, the storage unit 14 may be implemented by, for example, a semiconductor memory device, such as a Random Access Memory (RAM) or a flash memory, a storage device, such as a hard disk or an optical disk, or the like. Meanwhile, in the example illustrated in FIG. 2, the storage unit 14 is installed inside the server apparatus 10-1, but the storage unit 14 may be installed outside the server apparatus 10-1 or a plurality of storage units may be installed.

### 2-2-4-1. Symbol definition information storage unit 14a

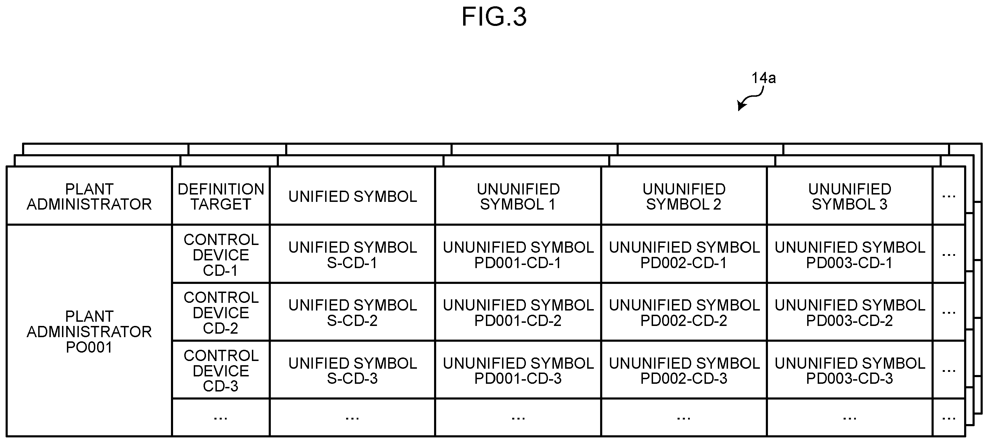

The symbol definition information storage unit 14a stores therein the symbol definition information. For example, the symbol definition information storage unit 14a stores therein the symbol definition information that is set by a definition unit 15a of the control unit 15 (to be described later). An example of data that is stored in the symbol definition information storage unit 14a will be described below with reference to FIG. 3. FIG. 3 is a diagram illustrating an example of the symbol definition information storage unit 14a of the server apparatus 10-1 according to the first embodiment. In the example illustrated in FIG. 3, the symbol definition information storage unit 14a includes items such as a "plant administrator", a "definition target", a "unified symbol", and an "ununified symbol".

The "plant administrator" indicates identification information for identifying a user who uses the plant diagram, and is, for example, an identification number or an identification symbol of the plant administrator O. The "definition target" is identification information for identifying a symbol of the same type for unifying a display mode, and is, for example, an identification number or an identification symbol of a plant device or a plant facility that corresponds to the symbol. The "unified symbol" is identification information for identifying a display mode of a unified symbol for unifying different display modes of symbols of the same type, and is, for example, a shape (a figure or a line style), a size, a color, or orientation (angle) of the symbol, presence or absence of text that belongs to the symbol, a symbol display form (for example: lighting on the monitor screen or a color is changed), or the like. The "ununified symbol" is identification information for identifying a display mode of an ununified symbol that indicates a different display mode that is to be replaced with the unified symbol, and is, for example, a shape (a figure or a line style), a size, a color, or the like of the symbol in each of the plan diagrams, orientation (angle) of the symbol, presence or absence of text that belongs to the symbol, the symbol display form (for example: lighting on the monitor screen or a color is changed), or the like.

Specifically, FIG. 3 illustrates an example in which the symbol definition information storage unit 14a stores therein data of {definition target: "control device CD-1", unified symbol: "unified symbol S-CD-1", ununified symbol 1: "ununified symbol PD001-CD-1 ", ununified symbol 2: "ununified symbol PD002-CD-1", ununified symbol 3: "ununified symbol PD003-CD-1", ...}, {definition target: "control device CD-2", unified symbol: "unified symbol S-CD-2", ununified symbol 1: "ununified symbol PD001-CD-2", ununified symbol 2: "ununified symbol PD002-CD-2", ununified symbol 3: "ununified symbol PD003-CD-2", ...} and {definition target: "control device CD-3", unified symbol: "unified symbol S-CD-3", ununified symbol 1: "ununified symbol PD001-CD-3", ununified symbol 2: "ununified symbol PD002-CD-3", ununified symbol 3: "ununified symbol PD003-CD-3", ...} as the unified symbol definition information on the symbol that is received from the plant administrator terminal 20 of the plant administrator O who is identified by a "plant administrator PO001".

### 2-2-4-2. Plant diagram information storage unit 14b

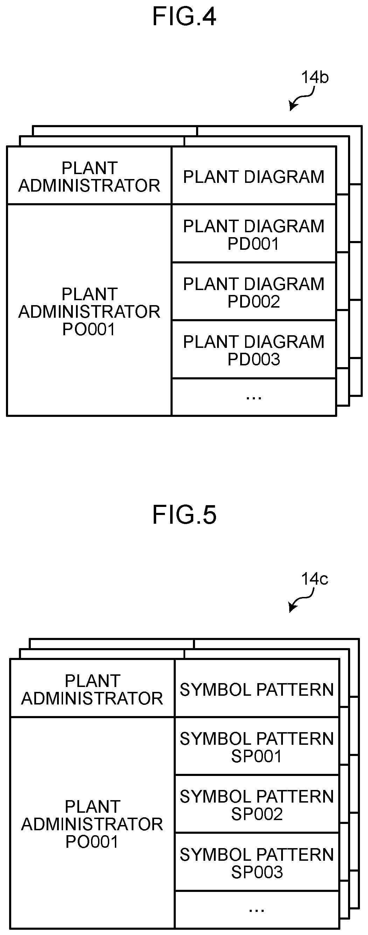

The plant diagram information storage unit 14b stores therein the plant diagram information. For example, the plant diagram information storage unit 14b stores therein the plant diagram information that is acquired by an acquisition unit 15b of the control unit 15 (to be described later). An example of data that is stored in the plant diagram information storage unit 14b will be described below with reference to FIG. 3. FIG. 4 is a diagram illustrating an example of the plant diagram information storage unit 14b of the server apparatus 10-1 according to the first embodiment. In the example illustrated in FIG. 4, the plant diagram information storage unit 14b includes items such as a "plant administrator" and a "plant diagram".

The "plant administrator" indicates identification information for identifying a user who uses the plant diagram, and is, for example, an identification number or an identification symbol of the plant administrator O. The "plant diagram" is diagram data of a diagram related to a plant, and is digital data of a building diagram, a layout diagram, a P&ID, an ECWD, an IBD, a single line diagram, a soft logic diagram, or the like of the plant, for example.

Specifically, FIG. 4 illustrates an example in which the plant diagram information storage unit 14b stores therein data of {"plant diagram PD001 ", "plant diagram PD002", "plant diagram PD003", ...} as the "plant diagram" that is acquired from the plant administrator terminal 20 of the plant administrator O who is identified by a "plant administrator PO001".

### 2-2-4-3. Symbol pattern information storage unit 14c

The symbol pattern information storage unit 14c stores therein the symbol pattern information. For example, the symbol pattern information storage unit 14c stores therein a symbol pattern that is identified by a detection unit 15d of the control unit 15 (to be described later). An example of data that is stored in the symbol pattern information storage unit 14c will be described below with reference to FIG. 5. FIG. 5 is a diagram illustrating an example of the symbol pattern information storage unit 14c of the server apparatus 10-1 according to the first embodiment. In the example illustrated in FIG. 5, the symbol pattern information storage unit 14c includes items such as a "plant administrator" and a "symbol pattern".

The "plant administrator" indicates the identification information for identifying the user who uses the plant diagram, and is, for example, the identification number or the identification symbol of the plant administrator O. The "symbol pattern" is identification information for identifying a display mode of a symbol, and is, for example, a shape, a line style, a color, orientation, presence or absence of belonging text, a display form, or the like of the symbol.

Specifically, FIG. 5 illustrates an example in which the symbol pattern information storage unit 14c stores therein data of {"symbol pattern SP001", "symbol pattern SP002", " symbol pattern SP003", ...} as the "symbol pattern" of the symbol that is received from the plant administrator terminal 20 of the plant administrator O who is identified by the "plant administrator PO001".

### 2-2-4-4. Symbol detection information storage unit 14d

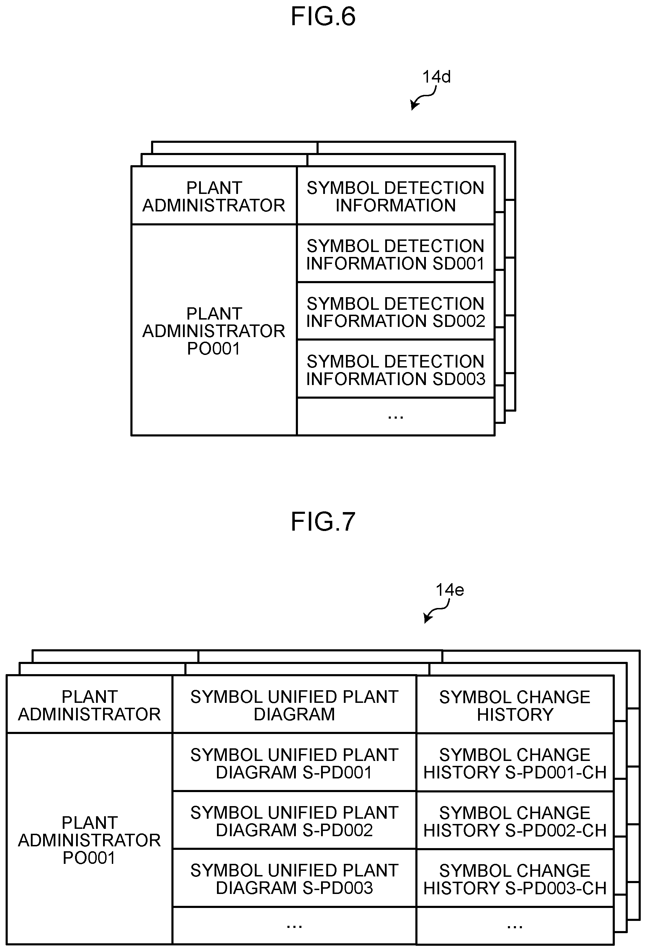

The symbol detection information storage unit 14d stores therein the symbol detection information. For example, the symbol detection information storage unit 14d stores therein symbol detection information that is generated by a detection unit 15c of the control unit 15 (to be described later). An example of data that is stored in the symbol detection information storage unit 14d will be described below with reference to FIG. 6. FIG. 6 is a diagram illustrating an example of the symbol detection information storage unit 14d of the server apparatus 10-1 according to the first embodiment. In the example illustrated in FIG. 6, the symbol detection information storage unit 14d includes items such as a "plant administrator" and "symbol detection information".

The "plant administrator" indicates the identification information for identifying the user who uses the plant diagram, and is, for example, the identification number or the identification symbol of the plant administrator O. The "symbol detection information" is information (symbol detection result) that is related to the symbol that is output by the detection unit 15d, and is, for example, the symbol detection diagram that is a plant diagram in which a detected symbol is colored and displayed in a highlighted manner, the symbol detection list in which detected symbols are listed, or the like.

Specifically, FIG. 6 illustrates an example in which the symbol detection information storage unit 14d stores therein data of {"symbol detection information SD001 ", "symbol detection information SD002", "symbol detection information SD003", ...} as the "symbol detection information" on the symbol that is received from the plant administrator terminal 20 of the plant administrator O who is identified by the "plant administrator PO001".

### 2-2-4-5. Symbol unification information storage unit 14e

The symbol unification information storage unit 14e stores therein the symbol unification information. For example, the symbol unification information storage unit 14e stores therein the symbol unification information that includes the symbol unified plant diagram or the symbol change history that is generated by a generation unit 15e of the control unit 15 (to be described later). An example of data that is stored in the symbol unification information storage unit 14e will be described below with reference to FIG. 7. FIG. 7 is a diagram illustrating an example of the symbol unification information storage unit 14e of the server apparatus 10-1 according to the first embodiment. In the example illustrated in FIG. 7, the symbol unification information storage unit 14e includes items such as a "plant administrator", a "symbol unified plant diagram", and a "symbol change history".

The "plant administrator" indicates the identification information for identifying the user who uses the plant diagram, and is, for example, the identification number or the identification symbol of the plant administrator O. The "symbol unified plant diagram" is diagram data of a diagram in which display modes of symbols of the same type are unified, and is, for example, digital data of a building diagram, a layout diagram, a P&ID, an ECWD, an IBD, a single line diagram, a soft logic diagram, or the like in which an ununified symbol is replaced with a unified symbol. The "symbol change history" is a history of unification of the display modes of the symbols of the same type, and is, for example, text data of a list of identification information or location information on symbols for which an ununified symbol is replaced with a unified symbol in each of plant diagrams.

Specifically, FIG. 7 illustrates an example in which the symbol unification information storage unit 14e stores therein data of {"symbol unified plant diagram S-PD001", "symbol unified plant diagram S-PD002", "symbol unified plant diagram S-PD003", ...} as the symbol unification information on the symbol that is received from the plant administrator terminal 20 of the plant administrator O who is identified by the "plant administrator PO001" and as the "symbol unified plant diagram", and stores therein data of {"symbol change history S-PD001-CH", "symbol change history S-PD002-CH", "symbol change history S-PD003-CH", ...} as the "symbol change history".

### 2-2-4-6. Detection model storage unit 14f

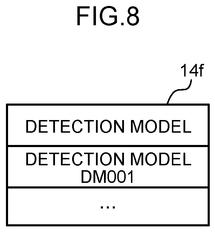

The detection model storage unit 14f stores therein the detection model DM. For example, the detection model storage unit 14f stores therein the detection model DM that is used by a notification unit 15g of the control unit 15 (to be described later). An example of data that is stored in the detection model storage unit 14f will be described below with reference to FIG. 8. FIG. 8 is a diagram illustrating an example of the detection model storage unit 14f of the server apparatus 10-1 according to the first embodiment. In the example illustrated in FIG. 8, the detection model storage unit 14f includes an item such as a "detection model".

The "detection model" is model data of a machine learning model, and is, for example, data that includes execution data, a model parameter, a hyper parameter, or the like for executing an algorithm of the detection model DM.

Specifically, FIG. 8 illustrates an example in which the detection model storage unit 14f stores therein data of a "detection model DM001", ... as the model data of the detection model DM that is used by the notification unit 15g.

### 2-2-5. Control unit 15

The control unit 15 controls the entire server apparatus 10-1. The control unit 15 includes the definition unit 15a, the acquisition unit 15b, the reception unit 15c, the detection unit 15d, the generation unit 15e, a providing unit 15f, and the notification unit 15g. Here, the control unit 15 may be implemented by, for example, an electronic circuit, such as a Central Processing Unit (CPU) or a Micro Processing Unit (MPU), or an integrated circuit, such as an Application Specific Integrated Circuit (ASIC) or a Field Programmable Gate Array (FPGA).

### 2-2-5-1. Definition unit 15a

The definition unit 15a sets various kinds of definitions. Meanwhile, the definition unit 15a may store each of the set definitions in the storage unit 14. In the following, a symbol definition information setting process will be described.

### Symbol definition information setting process

The definition unit 15a performs the symbol definition information setting process. The definition unit 15a defines a unified symbol that unifies different display modes of symbols as objects of the same type. For example, the definition unit 15a receives, the plant administrator terminal 20 that is a user terminal, a definition of the unified symbol that unifies, as display modes of a symbol, a shape, a size, and a color of the symbol, and performs setting by associating a plurality of different display modes for each of the symbols of the same type. In addition, the definition unit 15a may further receive, from the plant administrator terminal 20, a definition of the unified symbol that unifies, as the display mode of the symbol, a display form of the symbol, perform setting by associating a plurality of different display modes for each of the symbols of the same type.

As a specific example, firstly, the definition unit 15a receives a "unified symbol S-CD-1" of a "control device CD-1" that is input by the plant administrator O via the monitor screen of the plant administrator terminal 20. Secondly, the definition unit 15a receives an "ununified symbol PD001-CD-1" of the "control device CD-1" in a "plant diagram PD001" that is selected by the plant administrator O, an "ununified symbol PD002-CD-1" of the "control device CD-1" in a "plant diagram PD002", an "ununified symbol PD003-CD-1" of the "control device CD-1" in a "plant diagram PD003", .... Thirdly, the definition unit 15a stores, as the symbol definition information, {definition target: "control device CD-1", unified symbol: "unified symbol S-CD-1", ununified symbol 1: "ununified symbol PD001-CD-1", ununified symbol 2: "ununified symbol PD002-CD-1", ununified symbol 3: "ununified symbol PD003-CD-1", ...} in the symbol definition information storage unit 14a that corresponds to the "plant administrator PO001".

Meanwhile, the definition unit 15a may receive the symbol definition information from a predetermined database. For example, the definition unit 15a may receive standardized symbol definition information from a database that is managed by Open Platform Communication Unified Architecture (OPC UA).

### 2-2-5-2. Acquisition unit 15b

The acquisition unit 15b acquires various kinds of information. Meanwhile, the acquisition unit 15b may store various kinds of acquired information in the storage unit 14. In the following, a plant diagram information acquisition process and a plant diagram information display process will be described.

Plant diagram information acquisition process The acquisition unit 15b performs the plant diagram information acquisition process. The acquisition unit 15b acquires a plant diagram that is used for construction, operation, and maintenance of a plant. For example, the acquisition unit 15b acquires a plant diagram that is a configuration diagram that is generated by using a plurality of symbols that represent a plurality of components that are included in the plant. At this time, the acquisition unit 15b acquires, as the plant diagram, diagram data that includes the plurality of symbols that are generated with digital data. Furthermore, the acquisition unit 15b acquires the plant diagram information that is transmitted from the plant administrator terminal 20 serving as the user terminal and that is diagram data of the plant diagram that is selected by the plant administrator O who is the user. Meanwhile, the acquisition unit 15b stores the acquired plant diagram information in the plant diagram information storage unit 14b.

### Plant diagram information display process

The acquisition unit 15b performs the plant diagram information display process. For example, the acquisition unit 15b displays the acquired plant diagram that is used for construction, operation, and maintenance of the plant. At this time, the acquisition unit 15b displays the plant diagram on the plant administrator terminal 20.

As a specific example, the acquisition unit 15b acquires {"plant diagram PD001", "plant diagram PD002", "plant diagram PD003", ...} as the plant diagram information that is acquired from the plant administrator terminal 20 of the plant administrator O who is identified by the "plant administrator PO001", stores the plant diagram information in the plant diagram information storage unit 14b, and displays the plant diagram on the plant administrator terminal 20.

### 2-2-5-3. Reception unit 15c

The reception unit 15c receives various kinds of information. Meanwhile, the reception unit 15c may store the various kinds of received information in the storage unit 14. In the following, a symbol selection information reception process will be described.

### Symbol selection information reception process

The reception unit 15c performs the symbol selection information reception process. For example, the reception unit 15c receives symbol selection information that indicates a selection of a desired symbol from among the plurality of symbols that are included in the displayed plant diagram. At this time, the reception unit 15c receives, as the symbol selection information, a symbol that is selected by operation that is performed by the plant administrator O on the plant diagram that is displayed on the plant administrator terminal 20. Meanwhile, the reception unit 15c may store the received symbol selection information in the storage unit 14.

Furthermore, the reception unit 15c may receive, as a detection condition for detecting a symbol, symbol display mode information that includes a shape, a line style, a size, a color, orientation, text, a display form, or the like of the symbol.

As a specific example, the reception unit 15c receives, as the symbol selection information that is selected by the plant administrator O by performing click operation on an arbitrary symbol of the "control device CD-1" in the plant diagram displayed on the monitor screen of the plant administrator terminal 20 and that is transmitted from the plant administrator terminal 20, "control device CD-1-001" that is identification information on the symbol of the selected control device, a "plant diagram PD001 (1, 1) that is location information in the plant diagram, and the like.

Furthermore, the reception unit 15c receives, as the detection condition for detecting the symbol, {symbol display mode information: "detect symbol with completely matching shape"/"detect symbol with completely matching size"/"color is distinguished"/"detect symbol with completely matching orientation"/"detect symbol including text"/"display form is not distinguished"} or the like.

### 2-2-5-4. Detection unit 15d

The detection unit 15d outputs a detection result. Meanwhile, the detection unit 15d may store the output detection result in the storage unit 14. In the following, a symbol pattern registration process, a symbol angle identification process, a symbol text identification process, a symbol detection process, and a symbol detection information generation process will be described.

### Symbol pattern registration process

The detection unit 15d performs the symbol pattern registration process. The detection unit 15d identifies, as a pattern of the symbol for which the selection is received, at least one of the shape, the line style, the size, and the color of the symbol by using digital data. Further, the detection unit 15d is able to further identify, as the symbol pattern, a display form of the symbol. Meanwhile, the detection unit 15d stores the identified symbol pattern in the symbol pattern information storage unit 14c.

As a specific example, when the "control device CD-1-001" that is the identification information on the symbol of the selected "control device CD-1" and the "plant diagram PD001 (1, 1)" that is the location information in the plant diagram are received, the detection unit 15d acquires plant diagram information on a "plant diagram PD001" from the plant diagram information storage unit 14b, identifies digital data of the symbol of the "control device CD-1-001" based on the identification information and the location information, identifies {shape: "S-XXXX", line style: "solid line", size: "S-1010", color: "green", display form: "normal"} as the pattern of the symbol of the "control device CD-1-001", and store the symbol pattern in the symbol pattern information storage unit 14c to register the symbol pattern.

### Symbol angle identification process

The detection unit 15d performs the symbol angle identification process. The detection unit 15d identifies a symbol angle that is orientation of the symbol for which the selection is received, by using digital data. Meanwhile, the detection unit 15d may store the identified symbol angle in the storage unit 14.

As a specific example, when the "control device CD-1-001" that is the identification information on the symbol of the selected "control device CD-1" and the "plant diagram PD001 (1, 1)" that is the location information in the plant diagram are received, the detection unit 15d acquires the plant diagram information on the "plant diagram PD001" from the plant diagram information storage unit 14b, identifies digital data of the symbol of the "control device CD-1-001" based on the identification information and the location information, identifies {symbol angle: "180°"} as the symbol angle that is the orientation of the symbol of the "control device CD-1-001 ", and stores the symbol angle in the storage unit 14.

### Symbol text identification process

The detection unit 15d performs the symbol text identification process. The detection unit 15d identifies a symbol text that is a text that belongs to the symbol for which the selection is received, by using digital data. Meanwhile, the detection unit 15d may store the identified symbol text in the storage unit 14.

As a specific example, when the "control device CD-1-001" that is the identification information on the symbol of the "control device CD-1" that is the selected plant facility and the "plant diagram PD001 (1, 1)" that is the location information in the plant diagram are received, the detection unit 15d acquires the plant diagram information on the "plant diagram PD001" from the plant diagram information storage unit 14b, identifies digital data of the symbol of the "control device CD-1-001" based on the identification information and the location information, identifies {symbol text: "S-YYYY"} as the symbol text that is a text that belongs to the symbol of the "control device CD-1-001 ", and stores the symbol text in the storage unit 14.

### Symbol detection process

The detection unit 15d performs the symbol detection process. For example, the detection unit 15d detects a symbol from the plant diagram. The detection unit 15d detects a symbol from among the plurality of symbols that are included in the plant diagram, based on the pattern of the symbol for which the selection is received. At this time, the detection unit 15d detects all of symbols that include the symbol used for the selection and that coincide with the display mode of the registered pattern, from the displayed plant diagram. Further, the detection unit 15d detects all of symbols that coincide with the shape, the line style, the size, and the color as the display modes, from among the plurality of symbols that are included in the plant diagram. Furthermore, the detection unit 15d detects all of symbols that coincide with the orientation as the display mode, from among the plurality of symbols that are included in the plant diagram. Moreover, the detection unit 15d detects all of symbols that coincide with the text as the display mode, from among the plurality of symbols that are included in the plant diagram. Furthermore, the detection unit 15d detects all of symbols that coincide with the display form as the display mode, from among the plurality of symbols that are included in the plant diagram.

As a specific example, when {symbol display mode information: "detect symbol with completely matching shape"/"detect symbol with completely matching line style"/"detect symbol with completely matching size"/"color is distinguished"/"detect symbol with completely matching orientation"/"detect symbol including text"/"display form is not distinguished"} is received as the detection condition for detecting the symbol of the "control device CD-1" in the "plant diagram PD001", the detection unit 15d acquires the plant diagram information on the "plant diagram PD001" from the plant diagram information storage unit 14b, acquires the symbol pattern of {shape: "S-XXXX", line style: "solid line", size: "S-1010", color: "green", symbol angle: "180°", symbol text: "S-YYYY", display form: "normal"} of the "control device CD-1" from the symbol pattern information storage unit 14c, searches through the plant diagram information on the "plant diagram PD001", and detects {"control device CD-1-001", "control device CD-1-002", ..., "control device CD-1-006"} as symbols that coincide with the symbol pattern of the symbol patter n{shape: "S-XXXX", line style: "solid line", size: "S-1010", color: "green", symbol angle: "180°", symbol text: "S-YYYY"}.

### Symbol detection information generation process

The detection unit 15d performs the symbol detection information generation process. For example, the detection unit 15d generates the symbol detection information that is a detection result related to the detected symbol. At this time, the detection unit 15d generates the symbol detection information symbol. Further, the detection unit 15d generates, as the symbol detection information, the symbol detection diagram that is a plant diagram in which the detected symbol is displayed in a highlighted manner. Furthermore, the detection unit 15d generates the symbol detection list in which detected symbols are listed. Meanwhile, the detection unit 15d stores the generated symbol detection information in the symbol detection information storage unit 14d.

As a specific example of the symbol detection diagram, the detection unit 15d acquires the plant diagram information on the "plant diagram PD001" from the plant diagram information storage unit 14b, generates, as the symbol detection diagram, the plant diagram information on the "plant diagram PD001" in which symbols corresponding to {"control device CD-1-001", "control device CD-1-002", ..., "control device CD-1-006"} that are the symbols of the detected "control device CD-1" are colored in blue and displayed in a highlighted manner, and stores the symbol detection diagram in the symbol detection information storage unit 14d.

As a specific example of the symbol detection list, the detection unit 15d generates, as the symbol detection list, {"control device CD-1-001", "control device CD-1-002", ..., "control device CD-1-006"} that are the symbols of the detected "control device CD-1", and stores the symbol detection list in the symbol detection information storage unit 14d.

### 2-2-5-5. Generation unit 15e

The generation unit 15e generates various kinds of information. Meanwhile, the generation unit 15e may store the various kinds of generated information in the storage unit 14. In the following, a symbol unified plant diagram generation process and a symbol change history generation process will be described.

### Symbol unified plant diagram generation process

The generation unit 15e performs the symbol unified plant diagram generation process. The generation unit 15e replaces detected symbols to unified symbols, and generates the symbol unified plant diagram in which display modes of symbols of the same type are unified.

As a specific example, firstly, the generation unit 15e acquires, from the symbol detection information storage unit 14d, identification information and location information on {"control device CD-1-001", "control device CD-1-002", ..., "control device CD-1-006"} that are the symbols of a "control device CD-1" that is detected from the "plant diagram PD001". Secondly, the generation unit 15e acquires, from the symbol definition information storage unit 14a, the symbol definition information of {definition target: "control device CD-1", unified symbol: "unified symbol S-CD-1", ununified symbol 1: "ununified symbol PD001-CD-1"} that corresponds to the identification information on the "control device CD-1". Thirdly, the generation unit 15e replaces all of {"control device CD-1-001", "control device CD-1-002", ..., "control device CD-1-006"} that are the symbols of the "control device CD-1" that is detected from the "plant diagram PD001" with the "unified symbol S-CD-1", generates a "symbol unified plant diagram S-PD001" in which the symbols are unified, and stores the symbol unified plant diagram in the symbol unification information storage unit 14e that corresponds to the "plant administrator PO001".

At this time, the generation unit 15e adjusts a display position of the replaced unified symbol in the symbol unified plant diagram. For example, when the size of the symbol is changed due to the replacement of the ununified symbol with the unified symbol and the unified symbol is displayed in an overlapping manner with a different symbol or a line, the generation unit 15e adjusts the display position of the unified symbol by changing a connection position of the unified symbol, changing a connection position of the different symbol, or changing a size or an angle of a line that is connected to the unified symbol.

### Symbol change history generation process

The generation unit 15e performs the symbol change history generation process. The generation unit 15e generates the symbol change history as a history of replacement of a detected symbol with a unified symbol. For example, the generation unit 15e generates text data of a list of identification information or location information on symbols for which the ununified symbols are replaced with the unified symbols in each of plant diagrams.

As a specific example, firstly, the generation unit 15e acquires, from the symbol detection information storage unit 14d, the identification information and location information on {"control device CD-1-001", "control device CD-1-002", ..., "control device CD-1-006"} that are the symbols of the "control device CD-1" that is detected from the "plant diagram PD001". Secondly, the generation unit 15e acquires, from the symbol definition information storage unit 14a, the symbol definition information of {definition target: "control device CD-1", unified symbol: "unified symbol S-CD-1", ununified symbol 1: "ununified symbol PD001-CD-1"} that corresponds to the identification information on the "control device CD-1". Thirdly, the generation unit 15e replaces all of {"control device CD-1-001", "control device CD-1-002", ..., "control device CD-1-006"} that are the symbols of the "control device CD-1" that is detected from the "plant diagram PD001" with the "unified symbol S-CD-1", generates a "symbol change history S-PD001-CH" that includes the identification information and the location information on the unified symbols, and stores the symbol change history in the symbol unification information storage unit 14e that corresponds to the "plant administrator PO001".

### 2-2-5-6. Providing unit 15f

The providing unit 15f provides various kinds of information. Meanwhile, the providing unit 15f may refer to various kinds of information that are stored in the storage unit 14. In the following, a symbol detection information transmission process, a symbol unification information transmission process, and a three-dimensional model construction process will be described.

### Symbol detection information transmission process

The providing unit 15f performs the symbol detection information transmission process. For example, the providing unit 15f transmits the symbol detection information that is the detection result related to the symbol that is detected by the detection unit 15d to the plant administrator terminal 20, and provides the symbol detection information to the plant administrator O.

As a specific example, the providing unit 15f transmits, as the symbol detection information, the symbol detection diagram, which is the plant diagram information on the "plant diagram PD001" in which all of the symbols in the detected "control device CD-1" are colored in blue and displayed in a highlighted manner, and the symbol detection list, which includes the identification information on {"control device CD-1-001", "control device CD-1-002", ..., "control device CD-1-006"} that are the symbols of the detected "control device CD-1", to the plant administrator terminal 20 of the plant administrator O.

### Symbol unification information transmission process

The providing unit 15f performs the symbol unification information transmission process. For example, the providing unit 15f transmits the symbol unification information that is generated by the generation unit 15e to the plant administrator terminal 20, and provides the symbol unification information to the plant administrator O.

As a specific example, the providing unit 15f transmits, as the symbol unification information, the "symbol unified plant diagram S-PD001" that corresponds to the "plant diagram PD001", a "symbol unified plant diagram S-PD002" that corresponds to the "plant diagram PD002", and a "symbol unified plant diagram S-PD003" that corresponds to the "plant diagram PD003" to the plant administrator terminal 20 of the plant administrator O who is identified by the "plant administrator PO001". Further, the providing unit 15f transmits, as the symbol unification information, the "symbol change history S-PD001-CH" that corresponds to the "plant diagram PD001", a "symbol change history S-PD002-CH" that corresponds to the "plant diagram PD002", and a "symbol change history S-PD003-CH" that corresponds to the "plant diagram PD003" to the plant administrator terminal 20 of the plant administrator O who is identified by the "plant administrator PO001 ".

### Three-dimensional model construction process

The providing unit 15f performs the three-dimensional model construction process. For example, the providing unit 15f constructs a three-dimensional model of the plant by using the generated symbol unified plant diagram, and provides the three-dimensional model to the plant administrator O who is the user.

As a specific example, firstly, the providing unit 15f acquires the "symbol unified plant diagram S-PD001" in which all of the symbols of the "control device CD-1" included in the "plant diagram PD001" are replaced with the "unified symbol S-CD-1". Secondly, the providing unit 15f constructs, in a resource of the server apparatus 10-1, a three-dimensional model for realizing a digital twin that enables simulation of the plant by using the acquired "symbol unified plant diagram S-PD001" as input data. Thirdly, the providing unit 15f transmits a right of use of the constructed three-dimensional model to the plant administrator terminal 20 of the plant administrator O who is identified by the "plant administrator PO001".

### 2-2-5-7. Notification unit 15g

The notification unit 15g provides various kinds of information. Meanwhile, the notification unit 15g may refer to various kinds of information that are stored in the storage unit 14. In the following, a symbol output result acquisition process and a symbol detection error notification process will be described.

### Symbol output result acquisition process

The notification unit 15g performs the symbol output result acquisition process. The notification unit 15g acquires an output result by using a trained machine learning model that outputs a symbol that is included in the plant diagram in accordance with input of the digital data and the symbol pattern of the plant diagram.

As a specific example, the notification unit 15g inputs the plant diagram information on the "plant diagram PD001" and the symbol pattern of {shape: "S-XXXX", line style: "solid line", size: "S-1010", color: "green", symbol angle: "180°", symbol text: "S-YYYY"} to the detection model DM of the detection model storage unit 14f, and acquires {"control device CD-1-001", "control device CD-1-002", ..., "control device CD-1-006", "control device CD-1-007"} that is an output result of the detection model DM.

### Symbol detection error notification process

The notification unit 15g performs the symbol detection error notification process. The notification unit 15g notifies the plant administrator O of a detection failure or false detection of a symbol by using the output result of the trained machine learning model.

As a specific example, the notification unit 15g compares { "control device CD-1-001", "control device CD-1-002", ..., "control device CD-1-006"} that are the symbols of the "control device CD-1" that is detected by the detection unit 15d and {"control device CD-1-001", "control device CD-1-002", ..., "control device CD-1-006", "control device CD-1-007"} that is the output result of the detection model DM, determines the possibility that there is a detection failure of the symbol of the "control device CD-1" with the identification information of the "control device CD-1-007", generates a message, such as "there is the possibility that there is a detection failure of the symbol", as symbol detection error information, and transmits the message to the plant administrator terminal 20 of the plant administrator O who is identified by the "plant administrator PO001".

### 2-3. Configuration example and process example of plant administrator terminal 20

A configuration example and a process example of the plant administrator terminal 20 will be described below with reference to FIG. 2. The plant administrator terminal 20 is a terminal that is used by the plant administrator O who manages a plant, and includes an input output unit 21, a control unit 22, and a communication unit 23.

### 2-3-1. Input output unit 21

The input output unit 21 controls input of various kinds of information to the plant administrator terminal 20. For example, the input output unit 21 is implemented by a mouse, a keyboard, a touch panel, or the like, and receives input of setting information or the like to the plant administrator terminal 20. Further, the input output unit 21 displays various kinds of information that are received from the plant administrator terminal 20. For example, the input output unit 21 is implemented by a display or the like, and displays various kinds of information that are stored in the plant administrator terminal 20.

The input output unit 21 displays a unified symbol definition screen that is viewed by the plant administrator O. Meanwhile, details of the unified symbol definition screen will be described later in the section of 2-3-4. First specific example of the display screen of the plant administrator terminal 20. Further, the input output unit 21 displays a plant diagram display screen that is viewed by the plant administrator O. Meanwhile, details of the plant diagram display screen will be described later in the section of 2-3-5. Second specific example of the display screen of the plant administrator terminal 20. Furthermore, the input output unit 21 displays a symbol selection screen that allows the plant administrator O to select a symbol. Meanwhile, details of the symbol selection screen will be described later in the section of 2-3-6. Third specific example of the display screen of the plant administrator terminal 20. Moreover, the input output unit 21 displays a unified plant diagram display screen that is viewed by the plant administrator O. Meanwhile, details of the unified plant diagram display screen will be described later in the section of 2-3-7. Fourth specific example of the display screen of the plant administrator terminal 20.

### 2-3-2. Control unit 22

The control unit 22 transmits various kinds of information. For example, the control unit 22 transmits the plant diagram information on the plant diagram that is selected by the plant administrator O to the server apparatus 10-1. Further, the control unit 22 transmits the symbol selection information on a symbol that is selected by the plant administrator O in the symbol selection screen to the server apparatus 10-1.

The control unit 22 receives various kinds of information. For example, the control unit 22 receives, from the server apparatus 10-1, the symbol detection information that includes the symbol detection diagram, the symbol detection list, or the like that is displayed by the input output unit 21. Further, the control unit 22 receives, from the server apparatus 10-1, the symbol unification information that includes the symbol unified plant diagram, the symbol change history, or the like that is displayed by the input output unit 21. Furthermore, the control unit 22 receives, from the server apparatus 10-1, the symbol detection error information that is displayed by the input output unit 21 and that notifies the plant administrator O of a detection failure or false detection of a symbol.

### 2-3-3. Communication unit 23

The communication unit 23 controls data communication with a different apparatus. For example, the communication unit 23 performs data communication with each of communication apparatuses via a router or the like. Further, the communication unit 23 is able to perform data communication with an operator terminal (not illustrated).

### 2-3-4. First specific example of display screen of plant administrator terminal 20

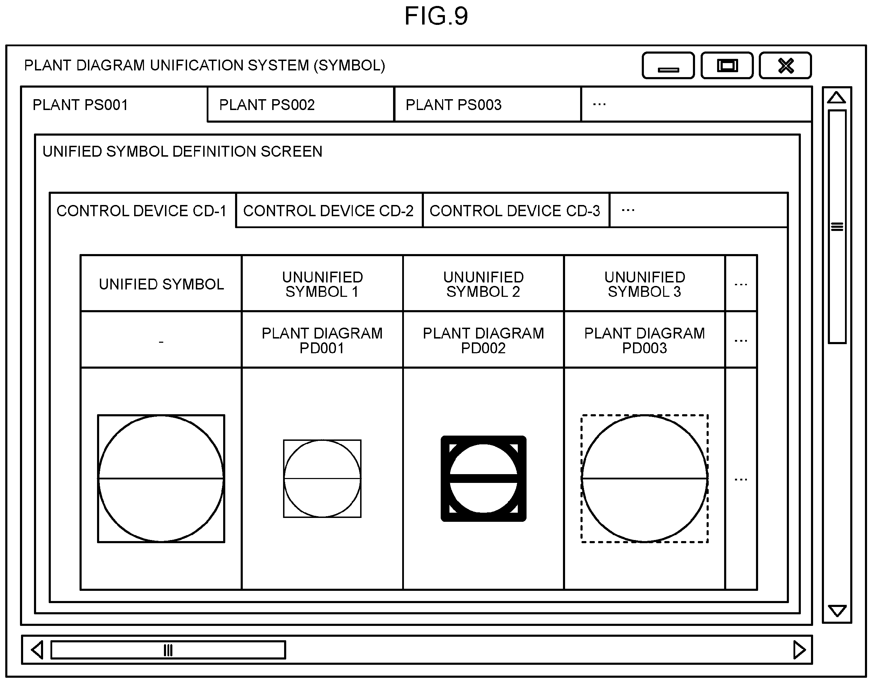

A first specific example of the display screen that is output by the input output unit 21 of the plant administrator terminal 20 will be described below with reference to FIG. 9.

FIG. 9 is a diagram illustrating the first specific example of the display screen of the plant administrator terminal 20 according to the first embodiment. In the following, the unified symbol definition screen that is viewed by the plant administrator O will be described.

### 2-3-4-1. Unified symbol definition screen

As illustrated in the example illustrated in FIG. 9, the plant administrator terminal 20 displays, for each plant, the unified symbol definition screen for defining a unified symbol that unifies different display modes of symbols of the same type. In the example illustrated in FIG. 9, in a plant diagram of a "plant PS001", the unified symbol definition screen for defining a unified symbol of the "control device CD-1" is displayed.

### 2-3-4-2. Unified symbol

The plant administrator O designates the unified symbol in the unified symbol definition screen. For example, the plant administrator O designates the unified symbol by drawing the unified symbol of the "control device CD-1" in the unified symbol definition screen. At this time, the plant administrator O may designate the unified symbol by selecting, in the unified symbol definition screen, the symbol of the "control device CD-1" in an arbitrary plant diagram. Further, the plant administrator O may designate the unified symbol by inputting, to the unified symbol definition screen, information on the shape, the line style, the size, the color, or the like of the "control device CD-1".

### 2-3-4-3. Ununified symbol

The plant administrator O designates the ununified symbol in the unified symbol definition screen. For example, the plant administrator O designates the ununified symbol by selecting, in the unified symbol definition screen, symbols of the "control device CD-1" in a plurality of plant diagrams. In the example illustrated in FIG. 9, the plant administrator O designates, in the unified symbol definition screen, the symbol of the "control device CD-1" in the "plant diagram PD001" as an "ununified symbol 1", designates the symbol of the "control device CD-1" in the "plant diagram PD002" as an "ununified symbol 2", and designates the symbol of the "control device CD-1" in the "plant diagram PD003" as an "ununified symbol 3".

### 2-3-5. Second specific example of display screen of plant administrator terminal 20

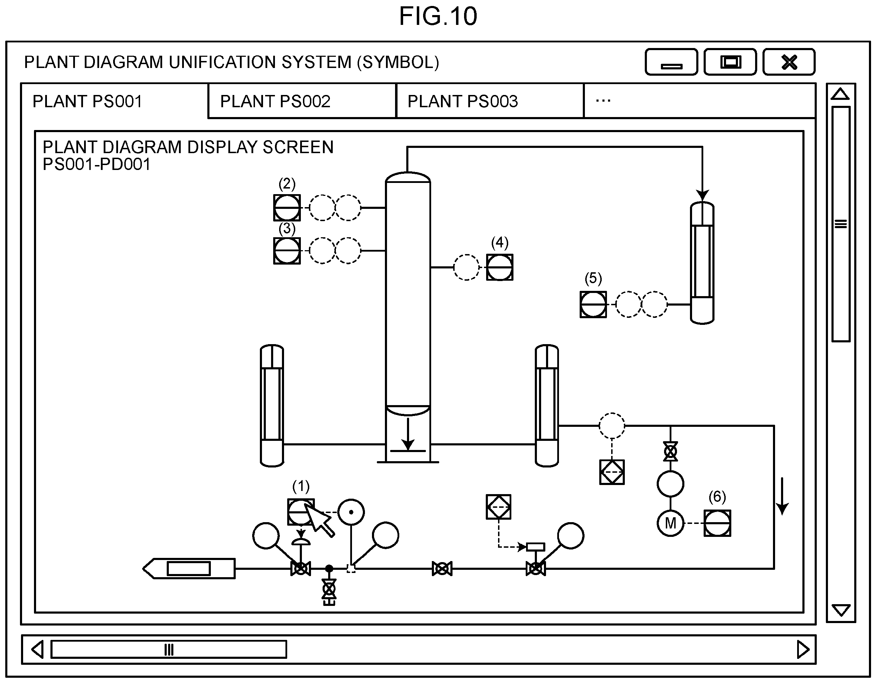

A second specific example of the display screen that is output by the input output unit 21 of the plant administrator terminal 20 will be described below with reference to FIG. 10. FIG. 10 is a diagram illustrating the second specific example of the display screen of the plant administrator terminal 20 according to the first embodiment. In the following, the plant diagram display screen that is viewed by the plant administrator O will be described.

### 2-3-5-1. Plant diagram display screen

As illustrated in an example in FIG. 10, the plant administrator terminal 20 displays, for each plant, a plant diagram that is generated with symbols that represent components of the plant and lines that represent connection components that connect the components of the plant. In the example illustrated in FIG. 10, in the plant diagram of the "plant PS001 ", ununified symbols (see (1) to (6) in FIG. 10) of the "control device CD-1", which are detected by the plant administrator O and which are to be unified.

### 2-3-5-2. Symbol display mode

The plant administrator terminal 20 is able to display, as the symbol display mode, a symbol with a different shape, a different line style, a different size, a different color, or the like, a symbol with different orientation, a symbol to which text belongs, or the like. Further, the plant administrator terminal 20 may display, as the symbol display mode, a certain display form in which the symbol is displayed in a blinking manner or the color is changed in accordance with a change of time. Furthermore, the plant administrator terminal 20 may be able to display a plant diagram that represents a three-dimensional plant configuration, by drawing an anteroposterior relationship of symbols.

### 2-3-6. Third specific example of display screen of plant administrator terminal 20

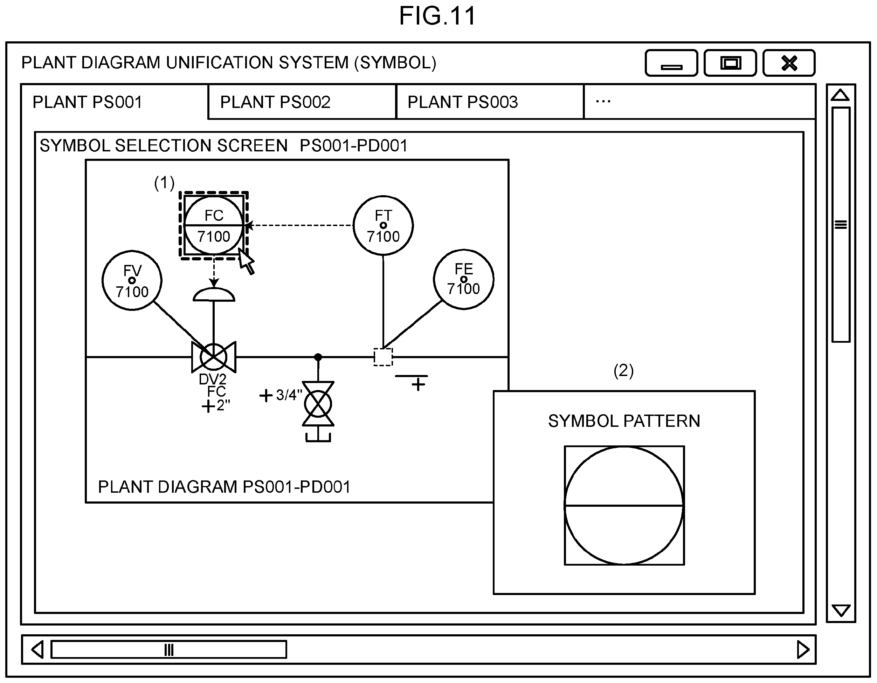

A third specific example of the display screen that is output by the input output unit 21 of the plant administrator terminal 20 will be described below with reference to FIG. 11. FIG. 11 is a diagram illustrating the third specific example of the display screen of the plant administrator terminal 20 according to the first embodiment. In the following, the symbol selection screen that allows the plant administrator O to select a symbol will be described.

### 2-3-6-1. Symbol selection screen

As illustrated in an example in FIG. 11, the plant administrator terminal 20 displays the symbol selection screen that allows the plant administrator O to select an ununified symbol that is detected on the plant diagram and that is to be unified. In the example illustrated in FIG. 11, the plant administrator terminal 20 displays a plant diagram in which an area around an ununified symbol (see (1) in FIG. 11) of a control device that is detected by the plant administrator O and that is to be unified in the plant diagram of the "plant PS001" is enlarged. At this time, the plant administrator O is able to select the ununified symbol by performing click operation on the ununified symbol that is detected and that is to be unified.

Further, the plant administrator terminal 20 displays a symbol pattern (see (2) in FIG. 11) in which the ununified symbol that is selected by the plant administrator O on the plant diagram is enlarged. At this time, the plant administrator O is able to modify a shape or the like of the displayed symbol pattern or delete text that belongs to the symbol.

### 2-3-6-2. Designation of symbol detection condition

The plant administrator O is able to designate a detection condition for detecting the ununified symbol. For example, the plant administrator O is able to designate, as the detection condition, a matched condition with respect to any of the shape, the line style, the size, and the color that are the symbol patterns, orientation of the symbol, presence or absence of text that belongs to the symbol, the display form of the symbol, or the like.

### 2-3-7. Fourth specific example of display screen of plant administrator terminal 20

A fourth specific example of the display screen that is output by the input output unit 21 of the plant administrator terminal 20 will be described below with reference to

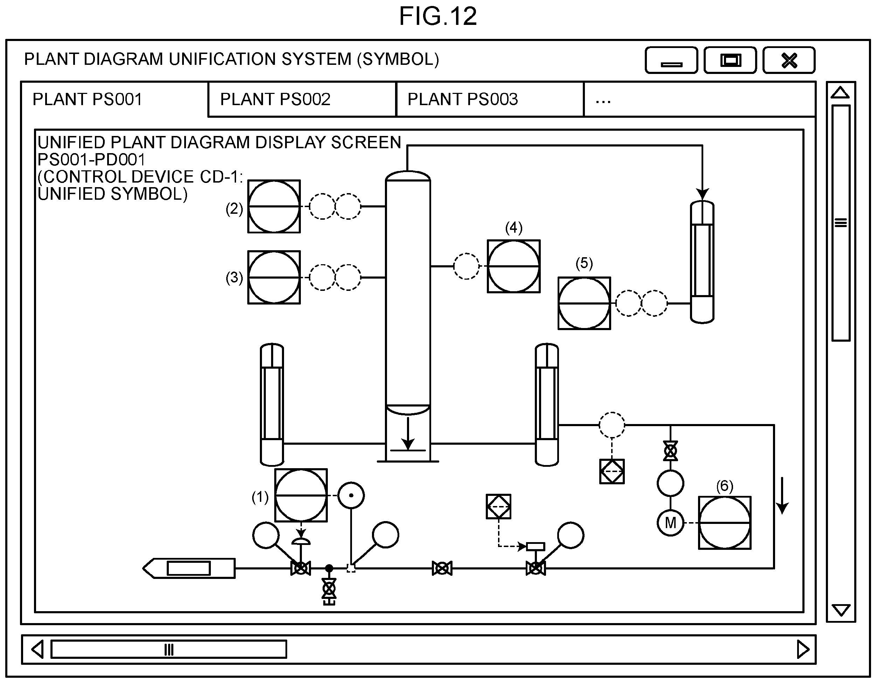

FIG. 12. FIG. 12 is a diagram illustrating the fourth specific example of the display screen of the plant administrator terminal 20 according to the first embodiment. In the following, a unified plant diagram display diagram that is viewed by the plant administrator O will be described.

### 2-3-7-1. Unified plant diagram display diagram

As illustrated in an example in FIG. 12, the plant administrator terminal 20 replaces detected ununified symbols with unified symbols and displays a unified plant diagram in which the symbols are unified. In the example illustrated in FIG. 12, the plant administrator terminal 20 displays the unified plant diagram (see (1) to (6) in FIG. 12) in which ununified symbols of the detected control devices are replaced with unified symbols in the plant diagram of the "plant PS001".

### 2-3-7-2. Adjustment of unified plant diagram

The plant administrator terminal 20 is able to display the unified plant diagram in which display positions of the replaced unified symbols are adjusted. In the example illustrated in FIG. 12, the plant administrator terminal 20 displays the unified plant diagram in which a display position of a different symbol and a size of a line that are connected to the symbol indicated by (1) in FIG. 12 are adjusted. Further, the plant administrator terminal 20 displays the unified plant diagram in which a display position of a different symbol and a connection position of a line that are connected to the symbol indicated by (3) in FIG. 12 are adjusted.

### 2-3-7-3. Symbol change history

The plant administrator terminal 20 is able to display the symbol change history as a history of replacement of the ununified symbols with the unified symbols. In the example illustrated in FIG. 12, the plant administrator terminal 20 is able to display the symbol change history as a list of identification information or location information on symbols, with respect to the ununified symbols of the detected control devices that are replaced with the unified symbols in the plant diagram of the "plant PS001".

### 2-3-7-4. Detection error notification

The plant administrator terminal 20 is able to display a detection error notification that indicates the possibility that there is a detection failure or false detection of the detected ununified symbol. For example, the plant administrator terminal 20 is able to display, as the detection error notification, a message of "there is the possibility that there is a detection failure of the symbol" or the like.

### 3. Flow of process performed by plant diagram unification system 100-1

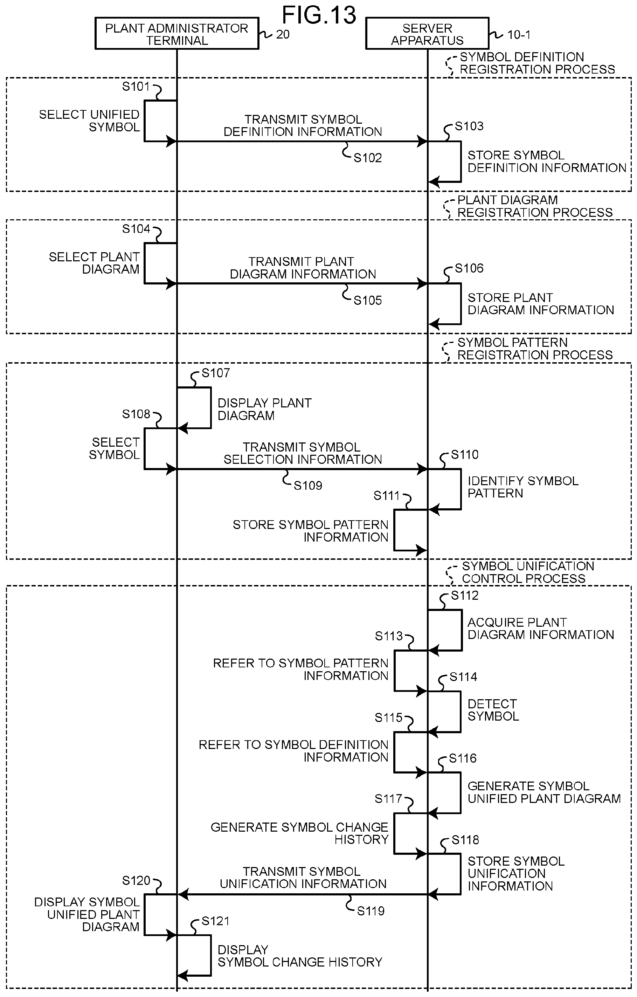

A flow of an entire process that is performed by the plant diagram unification system 100-1 according to the first embodiment will be described below with reference to FIG. 13. FIG. 13 is a sequence diagram illustrating an example of the flow of the entire process that is performed by the plant diagram unification system 100-1 according to the first embodiment. In the following, a symbol definition registration process, a plant diagram registration process, a symbol pattern registration process, and a symbol unification control process will be described. Meanwhile, processes from Step S101 to Step S121 below may be performed in a different order. Further, some of the processes from Step S101 to Step S121 may be omitted.

### 3-1. Symbol definition registration process

The plant diagram unification system 100-1 performs the symbol definition registration process that is represented by the processes from Step S101 to Step S103 below.

Firstly, the plant administrator terminal 20 performs a unified symbol selection process (Step S101). For example, the plant administrator terminal 20 receives a unified symbol and an ununified symbol that are received by being selected by operation performed by the plant administrator O. Secondly, the plant administrator terminal 20 performs a symbol definition information transmission process (Step S102). For example, the plant administrator terminal 20 transmits digital data of the unified symbol and the ununified symbol that are selected by operation performed by the plant administrator O to the server apparatus 10-1. Thirdly, the server apparatus 10-1 performs a symbol definition information storage process (Step S103). For example, the server apparatus 10-1 stores symbol definition information that is received from the plant administrator terminal 20, for each of the plant administrators O.

### 3-2. Plant diagram registration process

The plant diagram unification system 100-1 performs the plant diagram registration process that is represented by the processes from Step S104 to Step S106 below.

Firstly, the plant administrator terminal 20 performs a plant diagram selection process (Step S104). For example, the plant administrator terminal 20 receives a plant diagram of a plant that is selected by operation performed by the plant administrator O. Secondly, the plant administrator terminal 20 performs a plant diagram information transmission process (Step S105). For example, the plant administrator terminal 20 transmits digital data of the plant diagram of the plant that is selected by operation performed by the plant administrator O to the server apparatus 10-1. Thirdly, the server apparatus 10-1 performs a plant diagram information storage process (Step S106). For example, the server apparatus 10-1 stores plant diagram information that is received from the plant administrator terminal 20, for each of the plant administrators O.

### 3-3. Symbol pattern registration process

The plant diagram unification system 100-1 performs the symbol pattern registration process that is represented by the processes from Step S107 to Step S111 below.

Firstly, the plant administrator terminal 20 performs a plant diagram display process (Step S107). For example, the plant administrator terminal 20 displays, on the monitor screen, the plant diagram of the plant that is selected by operation performed by the plant administrator O. Secondly, the plant administrator terminal 20 performs a symbol selection process (Step S108). For example, the plant administrator terminal 20 receives a symbol that is selected on the plant diagram by operation performed by the plant administrator O. Thirdly, the plant administrator terminal 20 performs a symbol selection information transmission process (Step S109). For example, the plant administrator terminal 20 transmits, to the server apparatus 10-1, identification information on the symbol that is selected by operation performed by the plant administrator or location information on the plant diagram. Fourthly, the server apparatus 10-1 performs a symbol pattern identification process (Step S110). For example, the server apparatus 10-1 refers to the plant diagram information based on the symbol selection information that is received from the plant administrator terminal 20, and identifies a symbol pattern from the digital data of the plant diagram information. Fifthly, the server apparatus 10-1 performs a symbol pattern information storage process (Step S111). For example, the server apparatus 10-1 stores the symbol pattern information that includes the identified symbol pattern, for each of the plant administrators O.

### 3-4. Symbol unification control process

The plant diagram unification system 100-1 performs the symbol unification control process that is represented by the processes from Step S112 to Step S121 below.

Firstly, the server apparatus 10-1 performs a plant diagram information acquisition process (Step S112). For example, the server apparatus 10-1 receives a request for generation of symbol unification information by operation performed by the plant administrator O, searches through the stored plant diagram information, and acquires the plant diagram information on a corresponding plant. Secondly, the server apparatus 10-1 performs a symbol pattern information reference process (Step S113). For example, the server apparatus 10-1 receives a request for detection of a symbol by operation performed by the plant administrator O, searches through the stored symbol pattern information, and acquires the symbol pattern information on a corresponding symbol. Thirdly, the server apparatus 10-1 performs a symbol detection process (Step S114). For example, the server apparatus 10-1 searches through the acquired plant diagram information, and detects a symbol that coincides with the symbol pattern of the acquired symbol pattern information. Fourthly, the server apparatus 10-1 performs a symbol definition information reference process (Step S115). For example, the server apparatus 10-1 searches through the stored symbol definition information, and refers to the symbol definition information on a corresponding symbol. Fifthly, the server apparatus 10-1 performs a symbol unified plant diagram generation process (Step S116). For example, the server apparatus 10-1 replaces an ununified symbol among the detected symbols with a unified symbol and generates the symbol unified plant diagram in which symbols are unified. Sixthly, the server apparatus 10-1 performs a symbol change history generation process (Step S117). For example, the server apparatus 10-1 generates the symbol change history that represents a history of replacement of an ununified symbol with a unified symbol. Seventhly, the server apparatus 10-1 performs a symbol unification information storage process (Step S118). For example, the server apparatus 10-1 stores the symbol unification information that includes the generated symbol unified plant diagram and the generated symbol change history, for each of the plant administrators O. Eighthly, the server apparatus 10-1 performs the symbol unification information transmission process (Step S119). For example, the server apparatus 10-1 transmits the symbol unification information that includes the generated symbol unified plant diagram and the generated symbol change history to the plant administrator terminal 20. Ninthly, the plant administrator terminal 20 performs a symbol unified plant diagram display process (Step S120). For example, the plant administrator terminal 20 displays, on the monitor screen, the symbol unified plant diagram that is included in the symbol unification information that is received from the server apparatus 10-1. Tenthly, the plant administrator terminal 20 performs a symbol change history display process (Step S121). For example, the plant administrator terminal 20 displays, on the monitor screen, the symbol change history that is included in the symbol unification information that is received from the server apparatus 10-1.

### 4. Effects of first embodiment

Lastly, effects of the first embodiment will be described. In the following, first to ninth effects corresponding to the processes according to the first embodiment will be described.

### 4-1. First effect

Firstly, in one process according to the first embodiment as described above, the server apparatus 10-1 defines a unified symbol that unifies different display modes of symbols of the same type, acquires a plant diagram that is used for construction, operation, and maintenance of a plant, detects a symbol that is included in the acquired plant diagram, replaces a detected symbol with the unified symbol, and generates a symbol unified diagram in which the display modes of the symbols of the same type are unified. Therefore, in one process according to the first embodiment, it is possible to easily unify symbols that are displayed in the plant diagram.

### 4-2. Second effect

Secondly, in one process according to the first embodiment as described above, the server apparatus 10-1 receives, from the plant administrator terminal 20, a definition of the unified symbol for unifying, as the display modes of a symbol, a shape, a size, and a color of the symbol, and performs setting by associating a plurality of different display modes for each of the symbols of the same type. Therefore, in one process according to the first embodiment, the plant administrator O designates the unified symbol, so that it is possible to easily unify the symbols that are displayed in the plant diagram.

### 4-3. Third effect

Thirdly, in one process according to the first embodiment as described above, the server apparatus 10-1 adjusts a display position of the replaced unified symbol in the symbol unified diagram. Therefore, in one process according to the first embodiment, by adjusting deviation of the symbol that is caused by the replacement with the unified symbol, it is possible to easily unify the symbols that are displayed in the plant diagram.

### 4-4. Fourth effect

Fourthly, in one process according to the first embodiment as described above, the server apparatus 10-1 generates a symbol change history of replacement of a detected symbol with the unified symbol. Therefore, in one process according to the first embodiment, it is possible to easily unify the symbols that are displayed in the plant diagram, and it is possible to easily generate the symbol change history.

### 4-5. Fifth effect

Fifthly, in one process according to the first embodiment as described above, the server apparatus 10-1 constructs a three-dimensional model of the plant by using the generated symbol unified diagram, and provides the constructed three-dimensional model to the plant administrator O. Therefore, in one process according to the first embodiment, it is possible to easily unify the symbols that are displayed in the plant diagram, and it is possible to improve accuracy of plant simulation.

### 4-6. Sixth effect

Sixthly, in one process according to the first embodiment as described above, the server apparatus 10-1 receives a selection of a desired symbol from among a plurality of symbols that are included in the displayed plant diagram, registers a pattern of the symbol for which the selection is received, and detects, from the displayed plant diagram, all of symbols that coincide with a display mode of the registered pattern of the symbol and that include the symbol for which the selection is received. Therefore, in one process according to the first embodiment, by efficiently detecting a symbol that coincides with the display mode of the symbol that is selected by the plant administrator O, it is possible to easily unify the symbols that are displayed in the plant diagram.

### 4-7. Seventh effect

Seventhly, in one process according to the first embodiment as described above, the server apparatus 10-1 acquires, as the plant diagram, diagram data that includes a plurality of symbols that are generated with digital data, receives a symbol that is selected by operation that is performed by the plant administrator O on the plant diagram that is displayed on the plant administrator terminal 20, identifies at least one of a shape, a line style, a size, and a color of the symbol as a symbol pattern for which the selection is received, and detects all of symbols that coincide with the symbol pattern from among the plurality of symbols that are included in the plant diagram. Therefore, in one process according to the first embodiment, by efficiently detecting a symbol that coincides with the shape, the line style, the size, the color, or the like of the symbol that is selected by the plant administrator O, it is possible to easily unify the symbols that are displayed in the plant diagram.

### 4-8. Eighth effect

Eighthly, in one process according to the first embodiment as described above, the server apparatus 10-1 further identifies orientation of the symbol for which the selection is received, and detect all of symbols that coincide with the orientation of the symbol from among the plurality of symbols that are included in the plant diagram. Therefore, in one process according to the first embodiment, by efficiently detecting a symbol that coincides with the shape, the line style, the size, the color, or the like of the symbol that is selected by the plant administrator O and that further coincides with the orientation of the symbol, it is possible to easily unify the symbols that are displayed in the plant diagram.

### 4-9. Ninth effect

Ninthly, in one process according to the first embodiment as described above, the server apparatus 10-1 further identifies text that belongs to the symbol for which the selection is received, and detects all of symbols that coincide with the text from among the plurality of symbols that are included in the plant diagram. Therefore, in one process according to the first embodiment, by efficiently detecting a symbol that coincides with the shape, the line style, the size, the color, or the like of the symbol that is selected by the plant administrator O and that further coincides with the text that belongs to the symbol, it is possible to easily unify the symbols that are displayed in the plant diagram.

### Second embodiment

A configuration and a process of a plant diagram unification system 100-2 according to a second embodiment, a configuration and a process of each of apparatuses of the plant diagram unification system 100-2, the flow of processes performed by the plant diagram unification system 100-2 will be first described in sequence, and effects of the second embodiment will be lastly described. Meanwhile, in the second embodiment, the plant diagram unification system 100-2 that unifies display modes of lines as objects of a plant diagram will be described as one example, but objects and fields of use are not specifically limited. Furthermore, explanation of the configurations and the processes that are common to the first embodiment will be omitted.

### 1. Configuration and process of plant diagram unification system 100-2

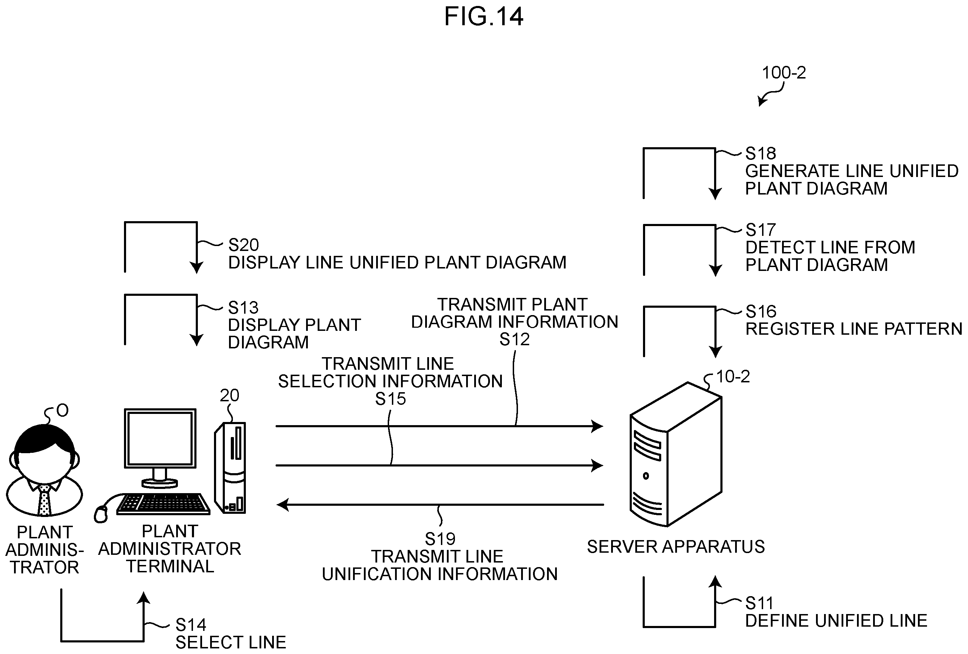

A configuration and a process of the plant diagram unification system 100-2 according to the second embodiment will be described in detail below with reference to FIG. 14. FIG. 14 is a diagram illustrating a configuration example and a process example of the plant diagram unification system 100-2 according to the second embodiment. In the following, a configuration example of the entire plant diagram unification system 100-2, a process example of the plant diagram unification system 100-2, and effects of the plant diagram unification system 100-2 will be described.

### 1-1. Configuration example of entire plant diagram unification system 100-2

A configuration example of the entire the plant diagram unification system 100-2 according to the second embodiment will be described. the plant diagram unification system 100-2 includes a server apparatus 10-2, the plant diagram unification apparatus that is a plant diagram unification apparatus and the plant administrator terminal 20 that is used by a plant administrator O. Here, the server apparatus 10-2 and the plant administrator terminal 20 are communicably connected to each other in a wired or wireless manner via a predetermined communication network (not illustrated). Meanwhile, as the predetermined communication network, various kinds of communication networks, such as the Internet and a dedicated line, may be adopted. Further, the plant diagram unification system 100-2 illustrated in FIG. 14 may include the plurality of server apparatuses 10-2 or the plurality of plant administrator terminals 20.

### 1-2. Process example of entire plant diagram unification system 100-2

A process example of the entire the plant diagram unification system 100-2 according to the second embodiment will be described. Meanwhile, processes from Step S11 to Step S20 below may be performed in a different order. Further, some of the processes from Step S11 to Step S20 below may be omitted.

### 1-2-1. Unified line definition process

Firstly, the server apparatus 10-2 defines a unified line (Step S11). For example, the server apparatus 10-2 acquires, from the plant administrator terminal 20, unified line definition information that includes a unified line that is defined for each of lines by the plant administrator O and a plurality of ununified lines that are associated with the unified line, and stores the unified line definition information.

### 1-2-2. plant diagram information transmission process

Secondly, the plant administrator terminal 20 transmits the plant diagram information to the server apparatus 10-2 (Step S12). For example, the plant administrator terminal 20 transmits the plant diagram information that is selected by operation performed by the plant administrator O to the server apparatus 10-2. At this time, the server apparatus 10-2 acquires and stores the plant diagram information.

### 1-2-3. Plant diagram display process

Thirdly, the plant administrator terminal 20 displays a plant diagram (Step S13). For example, the plant administrator terminal 20 displays, on the monitor screen, the plant diagram that is selected by operation performed by the plant administrator O.

### 1-2-4. Line selection process

Fourthly, the plant administrator O selects a line by operating the plant administrator terminal 20 (Step S14). For example, the plant administrator O selects a line of a pipe by performing click operation on the line of the pipe in the plant diagram that is displayed on the monitor screen of the plant administrator terminal 20.

Here, the line is a sign that represents a connection component that connects the components of the plant and that is displayed in the plant diagram. Furthermore, the connection component is a pipe (for example: a pipe through which a fluid flows) or wiring (for example: wiring through which electricity flows) that connects the plant devices, the plant facilities, and the like that are included in the plant.

At this time, the plant administrator O may select a part of lines that are included in the plant diagram or select all of the lines by operating the plant administrator terminal 20. Specifically, when lines in a specific range in the plant diagram are to be unified, , the plant administrator O selects the specific range in the plant diagram that is displayed on the monitor screen of the plant administrator terminal 20. In contrast, when lines in the entire range of the plant diagram are to be unified, the plant administrator O selects the entire range of the plant diagram that is displayed on the monitor screen of the plant administrator terminal 20. Furthermore, when lines that are included in a plurality of plant diagrams are to be unified, the plant administrator O selects a specific range or an entire range of each of the plant diagrams that are displayed on the monitor screen of the plant administrator terminal 20.

### 1-2-5. Line selection information transmission process

Fifthly, the plant administrator terminal 20 transmits line selection information to the server apparatus 10-2 (Step S15). For example, the plant administrator terminal 20 transmits identification information on a line of a control device that is selected by the plant administrator O or location information in the plant diagram to the server apparatus 10-2.

### 1-2-6. Line pattern registration process

Sixthly, the server apparatus 10-2 registers a line pattern (Step S16). For example, the server apparatus 10-2 acquires the plant diagram information based on the line selection information that is received from the plant administrator terminal 20, and identifies a line pattern from digital data of a line of a corresponding pipe. At this time, the server apparatus 10-2 stores the identified line pattern as line pattern information.

Here, the line pattern is identification information for identifying a display mode of a line that is an object, and is, for example, a shape (a thickness or a line style), a size, a color, or the like of the line. Further, the line pattern may include identification information for identifying the display mode, such as orientation (angle) of the line, presence or absence of a line number that belongs to the line, or a line display form (for example: lighting on the monitor screen or a color is changed) of the line, or the like.

### 1-2-7. Line detection process

Seventhly, the server apparatus 10-2 detects a line from the plant diagram (Step

S17). For example, the server apparatus 10-2 searches through the acquired plant diagram information and detects a line that coincides with the identified line pattern. At this time, the server apparatus 10-2 generates and stores line detection information that includes a line detection diagram that is a plant diagram in which the detected line is colored and displayed in a highlighted manner. Further, the server apparatus 10-2 generates and stores the line detection information that includes a line detection list in which detected lines are listed.

### 1-2-8. Line unified plant diagram generation process

Eighthly, the server apparatus 10-2 generates a line unified plant diagram from the detection result (Step S18). For example, the server apparatus 10-2 replaces an ununified line among the detected line with a unified line, generates line unification information that includes the line unified plant diagram in which lines are unified, and stores the line unification information. At this time, when the unified line deviates from a different line or a different symbol, the server apparatus 10-2 changes a location relationship among the unified line, the different line, the different symbol, and the like, and adjusts the objects in the line unified plant diagram. Further, the server apparatus 10-2 generates and stores the line unification information that includes a line change history that represents a history of replacement of an ununified line with a unified line.

The server apparatus 10-2 may detect a line by using a detection model DM that is a machine learning model, and notify the plant administrator O of a detection error, such as a detection failure or a false positive, when the line detection information includes the detection error.

### 1-2-9. Line unification information transmission process

Ninthly, the server apparatus 10-2 transmits the line unification information to the plant administrator terminal 20 (Step S19). For example, the server apparatus 10-2 transmits the line unification information that includes the generated line unified plant diagram and the generated line change history to the plant administrator terminal 20.

### 1-2-10. Line unified plant diagram display process

Tenthly, the plant administrator terminal 20 displays the line unified plant diagram (Step S20). For example, the plant administrator terminal 20 displays, on the monitor screen, the line unified plant diagram in which lines of pipes are unified. Further, the plant administrator terminal 20 displays, on the monitor screen, the line change history in which the lines of the pipes are unified.

### 1-2-11. Other

The server apparatus 10-2 may input the line unified plant diagram to a digital twin, construct a three-dimensional model of the plant, and provide the constructed three-dimensional model to the plant administrator O.

### 1-3. Effects of entire plant diagram unification system 100-2

In the following, effects of the plant diagram unification system 100-2 will be described. Meanwhile, the background of the plant diagram and an overview and a problem with the reference technology are the same as those described in the first embodiment, and therefore, explanation thereof will be omitted.

### 1-3-1. Overview of plant diagram unification system 100-2

The plant diagram unification system 100-2 includes the server apparatus 10-2 that is a plant diagram unification apparatus and the plant administrator terminal 20 that is used by the plant administrator O. First, the server apparatus 10-2 acquires, from the plant administrator terminal 20, the unified line definition information that includes a unified line that is defined for each of lines by the plant administrator O and a plurality of ununified lines that are associated with the unified line, and stores the unified line definition information. Subsequently, the server apparatus 10-2 detects a line that coincides with a line pattern from among all of line that are included in the plant diagram, based on the line pattern of the selected line. Further, the server apparatus 10-2 generates the line unified plant diagram and the line change history, in which an ununified line among detected lines is replaced with the unified line. Furthermore, the server apparatus 10-2 may input the generated line unified plant diagram to a digital twin and construct a three-dimensional model of the plant.

### 1-3-2. Effects

In the plant diagram unification system 100-2, it is possible to efficiently detect a line from a plant diagram that is used for construction, operation, and maintenance of a plant, generate the line unified plant diagram in which ununified lines in a plurality of plant diagrams are collectively replaced with unified lines, and provide the line unified plant diagram to a user of the plant diagram, such as the plant administrator O, a plant engineer, a plant contractor, or a plant designer. Further, in the plant diagram unification system 100-2, by inputting the generated line unified plant diagram to a digital twin, it is possible to improve accuracy of a three-dimensional model of the plant.

As described above, the plant diagram unification system 100-2 is able to easily unify lines as objects of the plant diagram, so that it is expected to contribute to development of a plant related technology for which the market is expanding.

### 2. Configuration and process of each of apparatuses in plant diagram unification system 100-2

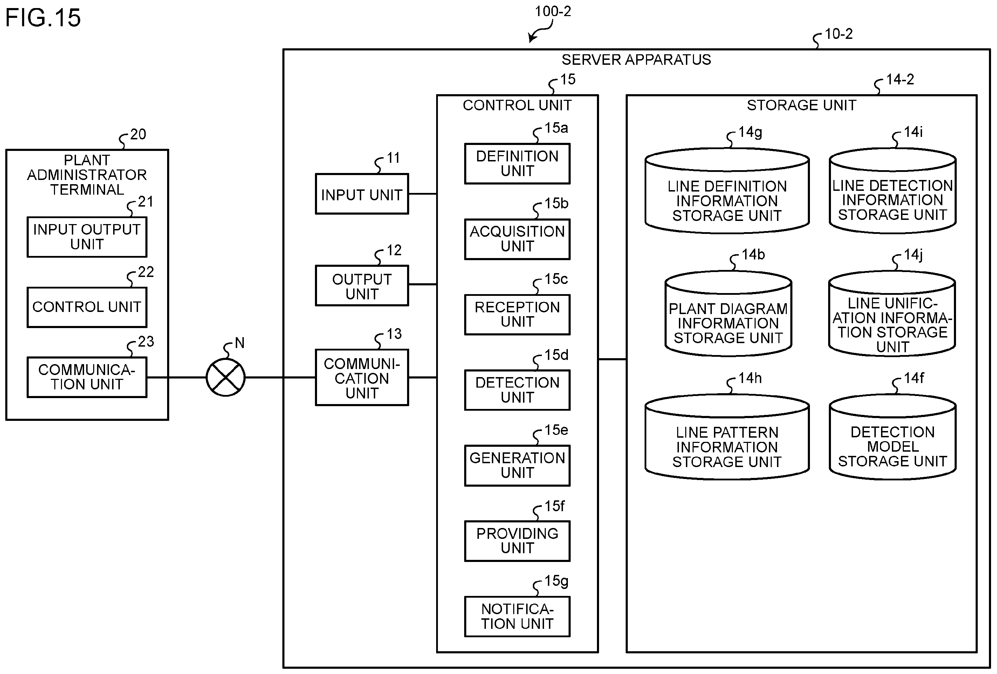

With reference to FIG. 15 to FIG. 19, a configuration example and a process example of each of the apparatuses that are included in the plant diagram unification system 100-2 illustrated in FIG. 14 will be described. In the following, a configuration example of the entire the plant diagram unification system 100-2 according to the second embodiment will be first described, and configuration examples and process examples of the server apparatus 10-2 and the plant administrator terminal 20 will be subsequently described in detail.

### 2-1. Configuration example of entire plant diagram unification system 100-2

A configuration example of the entire plant diagram unification system 100-2 illustrated in FIG. 14 will be described below with reference to FIG. 15. FIG. 15 is a block diagram illustrating a configuration example of each of the apparatuses that are included in the plant diagram unification system 100-2 according to the second embodiment. As illustrated in FIG. 15, the plant diagram unification system 100-2 includes the server apparatus 10-2 that is a plant diagram unification apparatus and the plant administrator terminal 20 that is a user terminal. The server apparatus 10-2 is communicably connected to the plant administrator terminal 20 by the communication network N that is implemented by the Internet, a dedicated line, or the like. Further, the server apparatus 10-2 is installed in a cloud environment, an on-premise environment, an edge environment, or the like.

### 2-2. Configuration example and process example of server apparatus 10-2

A configuration example and a process example of the server apparatus 10-2 illustrated in FIG. 1 will be described below with reference to FIG. 15. The server apparatus 10-2 includes the input unit 11, the output unit 12, the communication unit 13, the storage unit 14, and the control unit 15. In the following, the configuration example and the process example of the server apparatus 10-2 will be described; however, the plant administrator terminal 20 is able to perform the same process. In other words, the plant diagram unification system 100-2 may be implemented by only the plant administrator terminal 20. Meanwhile, the configuration examples and the process examples of the input unit 11, the output unit 12, and the communication unit 13 are the same as those of the first embodiment, and therefore, explanation thereof will be omitted.

### 2-2-1. Storage unit 14

The storage unit 14 stores therein various kinds of information that are referred to when the control unit 15 operates or various kinds of information that are acquired when the control unit 15 operates. The storage unit 14 includes a line definition information storage unit 14g, the plant diagram information storage unit 14b, a line pattern information storage unit 14h, a line detection information storage unit 14i, a line unification information storage unit 14j, and the detection model storage unit 14f. Here, the storage unit 14 may be implemented by, for example, a semiconductor memory device, such as a RAM or a flash memory, a storage device, such as a hard disk or an optical disk, or the like. Meanwhile, in the example illustrated in FIG. 15, the storage unit 14 is installed inside the server apparatus 10-2, but the storage unit 14 may be installed outside the server apparatus 10-2 or a plurality of storage units may be installed. Further, the configuration examples and the process examples of the plant diagram information storage unit 14b and the detection model storage unit 14f are the same as those of the first embodiment, and therefore, explanation thereof will be omitted.

### 2-2-1-1. Line definition information storage unit 14g

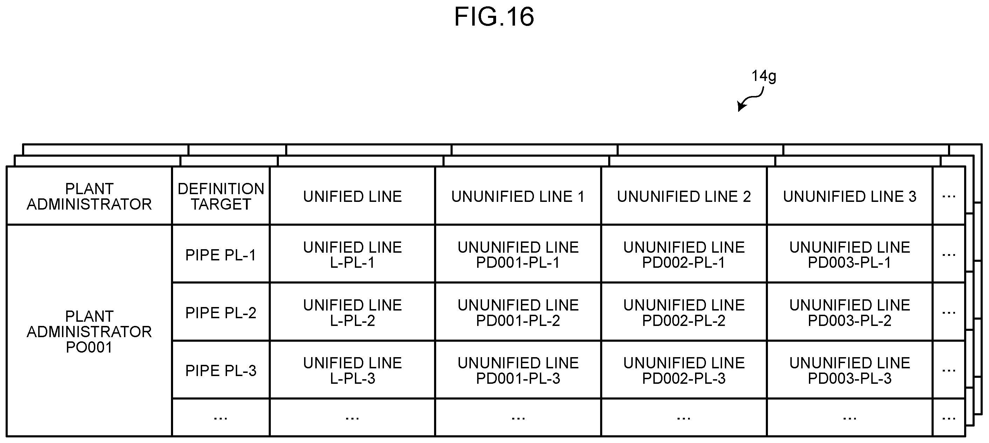

The line definition information storage unit 14g stores therein the line definition information. For example, the line definition information storage unit 14g stores therein the line definition information that is set by the definition unit 15a of the control unit 15 (to be described later). An example of data that is stored in the line definition information storage unit 14g will be described below with reference to FIG. 16. FIG. 16 is a diagram illustrating an example of the line definition information storage unit 14g of the server apparatus 10-2 according to the second embodiment. In the example illustrated in FIG. 16, the line definition information storage unit 14g includes items such as a "plant administrator", a "definition target", a "unified line", and an "ununified line".

The "plant administrator" indicates identification information for identifying a user who uses the plant diagram, and is, for example, the identification number or the identification symbol of the plant administrator O. The "definition target" is identification information for identifying a line of the same type for unifying a display mode, and is, for example, an identification number or an identification symbol of a pipe or wiring that corresponds to the line. The "unified line" is identification information for identifying a display mode of a unified line for unifying different display modes of lines of the same type, and is, for example, a shape (a thickness or a line style), a size, a color, or orientation (angle) of the line, presence or absence of a line number that belongs to the line, a line display form (for example: lighting on the monitor screen or a color is changed), or the like. The "ununified line" is identification information for identifying a display mode of the ununified line that indicates a different display mode that is to be replaced with the unified line, and is, for example, a shape (a thickness or a line style), a size, a color, or the like of the line in each of the plan diagrams, presence or absence of a line number that belongs to the line, the line display form (for example: lighting on the monitor screen or a color is changed), or the like.

Specifically, FIG. 16 illustrates an example in which the line definition information storage unit 14g stores therein data of {definition target: "pipe PL-1", unified line: "unified line L-PL-1", ununified line 1: "ununified line PD001-PL-1 ", ununified line 2: "ununified line PD002-PL-1", ununified line 3: "ununified line PD003-PL-1", ...}, {definition target: the "pipe PL-2", the unified line: "unified line L-CD-2", ununified line 1: "ununified line PD001-CD-2", ununified line 2: "ununified line PD002-CD-2", ununified line 3: "ununified line PD003-CD-2", ...}, {definition target: the "pipe PL-3", the unified line: "unified line L-CD-3", ununified line 1: "ununified line PD001-CD-3", ununified line 2: "ununified line PD002-CD-3", ununified line 3: "ununified line PD003-CD-3", ...} as the unified line definition information on the line that is received from the plant administrator terminal 20 of the plant administrator O who is identified by the "plant administrator PO001".

### 2-2-1-2. Line pattern information storage unit 14h

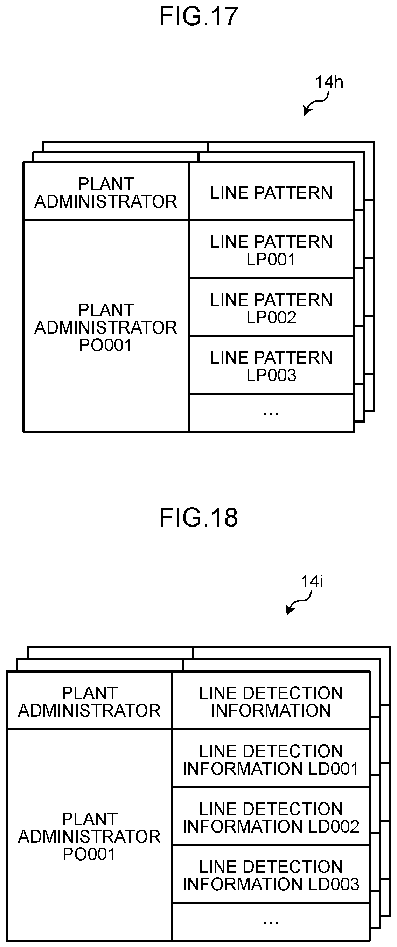

The line pattern information storage unit 14h stores therein the line pattern information. For example, the line pattern information storage unit 14h stores therein a line pattern that is identified by the detection unit 15c of the control unit 15 (to be described later). An example of data that is stored in the line pattern information storage unit 14h will be described below with reference to FIG. 17. FIG. 17 is a diagram illustrating an example of the line pattern information storage unit 14h of the server apparatus 10-2 according to the second embodiment. In the example illustrated in FIG. 17, the line pattern information storage unit 14h includes items such as a "plant administrator" and a "line pattern".

The "plant administrator" indicates the identification information for identifying the user who uses the plant diagram, and is, for example, the identification number or the identification symbol of the plant administrator O. The "line pattern" is identification information for identifying a display mode of a line, and is, for example, a thickness, a line style, a size, a color, orientation, presence or absence of a belonging line number, a display form, or the like of the line.

Specifically, FIG. 17 illustrates an example in which the line pattern information storage unit 14h stores therein data of {"line pattern LP001", "line pattern LP002", "line pattern LP003", ...} as the "line pattern" of the line that is received from the plant administrator terminal 20 of the plant administrator O who is identified by the "plant administrator PO001".

### 2-2-1-3. Line detection information storage unit 14i

The line detection information storage unit 14i stores therein the line detection information. For example, the line detection information storage unit 14i stores therein the line detection information that is generated by the detection unit 15d of the control unit 15 (to be described later). An example of data that is stored in the line detection information storage unit 14i will be described below with reference to FIG. 18. FIG. 18 is a diagram illustrating an example of the line detection information storage unit 14i of the server apparatus 10-2 according to the second embodiment. In the example illustrated in FIG. 18, the line detection information storage unit 14i includes items such as a "plant administrator" and "line detection information".

The "plant administrator" indicates the identification information for identifying the user who uses the plant diagram, and is, for example, the identification number or the identification symbol of the plant administrator O. The "line detection information" is information (line detection result) that is related to the line that is output by the detection unit 15d, and is, for example, the line detection diagram that is a plant diagram in which a detected line is colored and displayed in a highlighted manner, the line detection list in which detected lines are listed, or the like.

Specifically, FIG. 18 illustrates an example in which the line detection information storage unit 14i stores therein data of {"line detection information LD001", "line detection information LD002", "line detection information LD003", ...} as the "line detection information" on the line that is received from the plant administrator terminal 20 of the plant administrator O who is identified by the "plant administrator PO001".

### 2-2-1-4. Line unification information storage unit 14j

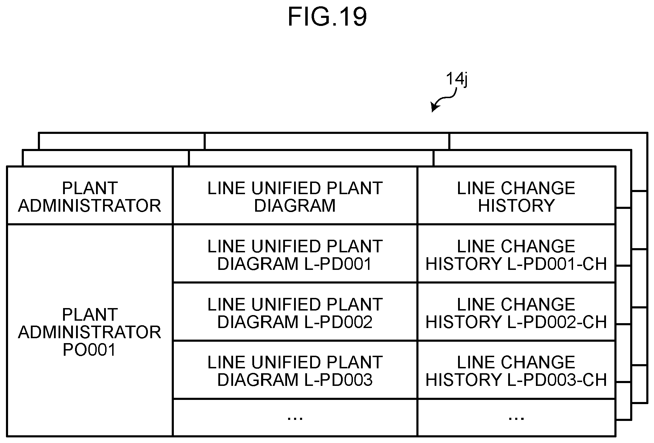

The line unification information storage unit 14j stores therein the line unification information. For example, the line unification information storage unit 14j stores therein the line unification information that includes the line unified plant diagram or the line change history that is generated by the generation unit 15e of the control unit 15 (to be described later). An example of data that is stored in the line unification information storage unit 14j will be described below with reference to FIG. 19. FIG. 19 is a diagram illustrating an example of the line unification information storage unit 14j of the server apparatus 10-2 according to the second embodiment. In the example illustrated in FIG. 19, the line unification information storage unit 14j includes items such as a "plant administrator", a "line unified plant diagram", and a "line change history".

The "plant administrator" indicates the identification information for identifying the user who uses the plant diagram, and is, for example, the identification number or the identification symbol of the plant administrator O. The "line unified plant diagram" is diagram data of a diagram in which display modes of lines of the same type are unified, and is, for example, digital data of a building diagram, a layout diagram, a P&ID, an ECWD, an IBD, a single line diagram, a soft logic diagram, or the like in which an ununified line is replaced with a unified line. The "line change history" is a history of unification of the display modes of the lines of the same type, and is, for example, text data of a list of identification information or location information on lines for which an ununified line is replaced with a unified line in each of plant diagrams.

Specifically, FIG. 19 illustrates an example in which the line unification information storage unit 14j stores therein data of {"line unified plant diagram L-PD001", "line unified plant diagram L-PD002", "line unified plant diagram L-PD003 ", ...} as the line unification information on the line that is received from the plant administrator terminal 20 of the plant administrator O who is identified by the "plant administrator PO001" and as the "line unified plant diagram", and stores therein data of {"line change history L-PD001-CH", "line change history L-PD002-CH", "line change history L-PD003-CH", ...} as the "line change history".

### 2-2-2. Control unit 15

The control unit 15 controls the entire server apparatus 10-2. The control unit 15 includes the definition unit 15a, the acquisition unit 15b, the reception unit 15c, the detection unit 15d, the generation unit 15e, the providing unit 15f, and the notification unit 15g. Here, the control unit 15 may be implemented by, for example, an electronic circuit, such as a CPU or an MPU, or an integrated circuit, such as an ASIC or an FPGA.

### 2-2-2-1. Definition unit 15a

The definition unit 15a sets various kinds of definitions. Meanwhile, the definition unit 15a may store each of the set definitions in the storage unit 14. In the following, a line definition information setting process will be described.

### Line definition information setting process

The definition unit 15a performs the line definition information setting process. The definition unit 15a defines a unified line that unifies different display modes of lines as objects of the same type. For example, the definition unit 15a receives, from the plant administrator terminal 20 that is a user terminal, a definition of the unified line that unifies, as display modes of a line, a shape, a size, and a color of the line, and performs setting by associating a plurality of different display modes for each of the lines of the same types. In addition, the definition unit 15a may further receive, from the plant administrator terminal 20, a definition of the unified line that unifies, as the display modes of the line, a display form of the line, and perform setting by associating a plurality of different display modes for each of the lines of the same types.

As a specific example, firstly, the definition unit 15a receives a "unified line L-PL-1" of a "pipe PL-1" that is input by the plant administrator O via the monitor screen of the plant administrator terminal 20. Secondly, the definition unit 15a receives an "ununified line PD001-PL-1" of the "pipe PL-1" in the "plant diagram PD001" that is selected by the plant administrator O, an "ununified line PD002-PL-1" of the "pipe PL-1" in the "plant diagram PD002", an "ununified line PD003-PL-1" of the "pipe PL-1" in the "plant diagram PD003", .... Thirdly, the definition unit 15a stores, as the line definition information, {definition target: "pipe PL-1", unified line: "unified line L-PL-1", ununified line 1: "ununified line PD001-PL-1 ", ununified line 2: "ununified line PD002-PL-1", ununified line 3: "ununified line PD003-PL-1", ...} in the line definition information storage unit 14g that corresponds to the "plant administrator PO001".

Meanwhile, the definition unit 15a may receive the line definition information from a predetermined database. For example, the definition unit 15a may receive standardized line definition information from a database that is managed by OPC UA.

### 2-2-2-2. Acquisition unit 15b

The acquisition unit 15b acquires various kinds of information. Meanwhile, the acquisition unit 15b may store various kinds of acquired information in the storage unit 14. In the following, the plant diagram information acquisition process and the plant diagram information display process will be described.

### Plant diagram information acquisition process

The acquisition unit 15b performs the plant diagram information acquisition process. The acquisition unit 15b acquires a plant diagram that is used for construction, operation, and maintenance of a plant. For example, the acquisition unit 15b acquires a plant diagram that is a configuration diagram that is generated by using a plurality of lines that represent a plurality of components that are included in the plant. At this time, the acquisition unit 15b acquires, as the plant diagram, diagram data that includes the plurality of lines that are generated with digital data. Furthermore, the acquisition unit 15b acquires the plant diagram information that is transmitted from the plant administrator terminal 20 serving as the user terminal and that is diagram data of the plant diagram that is selected by the plant administrator O who is the user. Meanwhile, the acquisition unit 15b stores the acquired plant diagram information in the plant diagram information storage unit 14b.

### Plant diagram information display process

The acquisition unit 15b performs the plant diagram information display process. For example, the acquisition unit 15b displays the acquired plant diagram that is used for construction, operation, and maintenance of the plant. At this time, the acquisition unit 15b displays the plant diagram on the plant administrator terminal 20.

As a specific example, the acquisition unit 15b acquires {"plant diagram PD001", "plant diagram PD002", "plant diagram PD003", ...} as the plant diagram information that is acquired from the plant administrator terminal 20 of the plant administrator O who is identified by the "plant administrator PO001", stores the plant diagram information in the plant diagram information storage unit 14b, and displays the plant diagram on the plant administrator terminal 20.

### 2-2-2-3. Reception unit 15c

The reception unit 15c receives various kinds of information. Meanwhile, the reception unit 15c may store the various kinds of received information in the storage unit 14. In the following, a line selection information reception process will be described.

### Line selection information reception process

The reception unit 15c performs the line selection information reception process. For example, the reception unit 15c receives the line selection information that indicates a selection of a desired line from among the plurality of lines that are included in the displayed plant diagram. At this time, the reception unit 15c receives, as the line selection information, a line that is selected by operation that is performed by the plant administrator O on the plant diagram that is displayed on the plant administrator terminal 20. Meanwhile, the reception unit 15c may store the received line selection information in the storage unit 14.

Furthermore, the reception unit 15c may receive, as a detection condition for detecting a line, line display mode information that includes a thickness, a line style, a size, a color, orientation, a line number, a display form, or the like of the line.

As a specific example, the reception unit 15c receives, as the line selection information that is selected by the plant administrator O by performing click operation on a line of an arbitrary pipe of the "pipe PL-1" in the plant diagram displayed on the monitor screen of the plant administrator terminal 20 and that is transmitted from the plant administrator terminal 20, a "pipe PL-1-001" that is identification information on the selected line, a "plant diagram PD001 (0, 1)" that is location information in the plant diagram, and the like.

Furthermore, the reception unit 15c receives, as the detection condition for detecting the line, {line display mode information: " detect line with completely matching thickness"/"detect line with completely matching line style"/"detect line with completely matching size"/"color is distinguished"/"detect line with completely matching orientation"/"detect line including line number"/"display form is not distinguished"} or the like.

### 2-2-2-4. Detection unit 15d)

The detection unit 15d outputs a detection result. Meanwhile, the detection unit 15d may store the output detection result in the storage unit 14. In the following, a line pattern registration process, a line angle identification process, a line number identification process, a line detection process, a line detection information generation process will be described.

### Line pattern registration process

The detection unit 15d performs the line pattern registration process. The detection unit 15d identifies, as a pattern of the line for which the selection is received, at least one of the thickness, the line style, the size, and the color of the line by using digital data. Further, the detection unit 15d is able to further identify, as the line pattern, a display form of the line. Meanwhile, the detection unit 15d stores the identified line pattern in the line pattern information storage unit 14h.

As a specific example, when the "pipe PL-1-001" that is the identification information on the line of the selected "pipe PL-1" and the "plant diagram PD001 (0, 1)" that is the location information in the plant diagram are received, the detection unit 15d acquires the plant diagram information on the "plant diagram PD001" from the plant diagram information storage unit 14b, identifies digital data of the line of the "pipe PL-1-001" based on the identification information and the location information, identifies {thickness: "L-XXXX", line style: "solid line", size: "L-1010", color: "red", display form: "normal"} as the pattern of the line of the "pipe PL-1-001", and stores the line pattern in the line pattern information storage unit 14h to register the line pattern.

### Line angle identification process

The detection unit 15d performs the line angle identification process. The detection unit 15d identifies a line angle that is orientation of the line for which the selection is received, by using digital data. Meanwhile, the detection unit 15d may store the identified line angle in the storage unit 14.

As a specific example, when the "pipe PL-1-001" that is the identification information on the line of the selected "pipe PL-1" and the "plant diagram PD001 (0, 1)" that is the location information in the plant diagram are received, the detection unit 15d acquires the plant diagram information on the "plant diagram PD001" from the plant diagram information storage unit 14b, identifies digital data of the line of the "pipe PL-1-001" based on the identification information and the location information, identifies {line angle: "180°"} as the line angle that is the orientation of the line of the "pipe PL-1-001", and stores the line angle in the storage unit 14.

### Line text identification process

The detection unit 15d performs the line text identification process. The detection unit 15d identifies a line number that belongs to the line for which the selection is received, by using digital data. Meanwhile, the detection unit 15d may store the identified line number in the storage unit 14.

As a specific example, when the "pipe PL-1-001" that is the identification information on the line of the "pipe PL-1" that is the selected pipe and the "plant diagram PD001 (1, 1)" that is the location information in the plant diagram are received, the detection unit 15d acquires the plant diagram information on the "plant diagram PD001" from the plant diagram information storage unit 14b, identifies digital data of the line of the "pipe PL-1-001" based on the identification information and the location information, identifies {line number: "L-YYYY"} as the line number that belongs to the line of the "pipe PL-1-001", and stores the line number in the storage unit 14.

### Line detection process

The detection unit 15d performs the line detection process. For example, the detection unit 15d detects a line from the plant diagram. The detection unit 15d detects a line from among the plurality of lines that are included in the plant diagram, based on the pattern of the line for which the selection is received. At this time, the detection unit 15d detects all of lines that include the line used for the selection and that coincide with the display mode of the registered pattern, from the displayed plant diagram. Further, the detection unit 15d detects all of lines that coincide with the thickness, the line style, the size, and the color as the display modes, from among the plurality of lines that are included in the plant diagram. Furthermore, the detection unit 15d detects all of lines that coincide with the orientation as the display mode, from among the plurality of lines that are included in the plant diagram. Moreover, the detection unit 15d detects all of lines that coincide with the line number as the display mode, from among the plurality of lines that are included in the plant diagram. Furthermore, the detection unit 15d detects all of lines that coincide with the display form as the display mode, from among the plurality of lines that are included in the plant diagram.

As a specific example, when {line display mode information: "detect line with completely matching thickness"/"detect line with completely matching line style"/"detect line with completely matching size"/"color is distinguished"/"detect line with completely matching orientation"/"detect line including line number"/"display form is not distinguished"} is received as the detection condition for detecting the line of the "pipe PL-1" in the "plant diagram PD001", the detection unit 15d acquires the plant diagram information on the "plant diagram PD001" from the plant diagram information storage unit 14b, acquires the line pattern of {thickness: "L-XXXX", line style: "solid line", size: "L-1010", color: "red", line angle: "180°", line number: "L-YYYY", display form: "normal"} of the "pipe PL-1" from the line pattern information storage unit 14h, searches through the plant diagram information on the "plant diagram PD001", and detects {"pipe PL-1-001", "pipe PL-1-002", ..., "pipe PL-1-010"} as lines that coincide with the line pattern of {thickness: "L-XXXX", line style: "solid line", size: "L-1010", color: "red", line angle: "180°", line number: "L-YYYY"}.

### Line detection information generation process

The detection unit 15d performs the line detection information generation process. For example, the detection unit 15d generates the line detection information that is a detection result related to the detected line. At this time, the detection unit 15d generates the line detection information that includes the identification information and the location information on the detected line. Further, the detection unit 15d generates, as the line detection information, the line detection diagram that is a plant diagram in which the detected line is displayed in a highlighted manner. Furthermore, the detection unit 15d generates the line detection list in which detected lines are listed. Meanwhile, the detection unit 15d the generated line detection information in the line detection information storage unit 14i.

As a specific example of the line detection diagram, the detection unit 15d acquires the plant diagram information on the "plant diagram PD001" from the plant diagram information storage unit 14b, generates, as the line detection diagram, the plant diagram information on the "plant diagram PD001" in which the lines corresponding to {"pipe PL-1-001", "pipe PL-1-002", ..., "pipe PL-1-010"} that are the lines of the detected "pipe PL-1" are colored in blue and displayed in a highlighted manner, and stores the line detection diagram in the line detection information storage unit 14i.

As a specific example of the line detection list, the detection unit 15d generates, as the line detection list, {"pipe PL-1-001", "pipe PL-1-002", ..., "pipe PL-1-010"} that are the lines of the detected "pipe PL-1", and stores the lien detection list in the line detection information storage unit 14i.

### 2-2-2-5. Generation unit 15e

The generation unit 15e generates various kinds of information. Meanwhile, the generation unit 15e may store the various kinds of generated information in the storage unit 14. In the following, a line unified plant diagram generation process and a line change history generation process will be described.

### Line unified plant diagram generation process

The generation unit 15e performs the line unified plant diagram generation process. The generation unit 15e replaces detected lines to unified lines, and generates the line unified plant diagram in which display modes of lines of the same type are unified.

As a specific example, firstly, the generation unit 15e acquires, from the line detection information storage unit 14i, identification information and location information on {"pipe PL-1-001", "pipe PL-1-002", ..., "pipe PL-1-010"} that are the lines of "pipe PL-1" that is detected from the "plant diagram PD001". Secondly, the generation unit 15e acquires, from the line definition information storage unit 14g, the line definition information of {definition target: "pipe PL-1", unified line: "unified line S-PL-1", ununified line 1: "ununified line PD001-PL-1"} that corresponds to the identification information on the "pipe PL-1". Thirdly, the generation unit 15e replaces all of {"pipe PL-1-001", "pipe PL-1-002", ..., "pipe PL-1-010"} that are the lines of the "pipe PL-1" that is detected from the "plant diagram PD001" with the "unified line S-PL-1", generates a "line unified plant diagram S-PD001" in which the lines are unified, and stores the line unified plant diagram in the line unification information storage unit 14j that corresponds to the "plant administrator PO001".

At this time, the generation unit 15e adjusts a display position of the replaced unified line in the line unified plant diagram. For example, when the size of the line is changed due to the replacement of the ununified line with the unified line and the unified line is displayed in an overlapping manner with a different line or a symbol, the generation unit 15e adjusts the display position of the unified line by changing a connection position of the unified line, changing a connection position of the different line, or changing a size or an angle of a symbol that is connected to the unified line.

### Line change history generation process

The generation unit 15e performs the line change history generation process. The generation unit 15e generates the line change history as a history of replacement of a detected line with a unified line. For example, the generation unit 15e generates text data of a list of identification information or location information on lines for which the ununified lines are replaced with the unified lines in each of plant diagrams.

As a specific example, firstly, the generation unit 15e acquires, from the line detection information storage unit 14i, the identification information and location information on {"pipe PL-1-001", "pipe PL-1-002", ..., "pipe PL-1-010"} that are the lines of the "pipe PL-1" that is detected from the "plant diagram PD001". Secondly, the generation unit 15e acquires, from the line definition information storage unit 14g, the line definition information {definition target: "pipe PL-1", unified line: "unified line S-PL-1", ununified line 1: "ununified line PD001-PL-1"} that corresponds to the identification information on the "pipe PL-1". Thirdly, the generation unit 15e replaces all of {"pipe PL-1-001", "pipe PL-1-002", ..., "pipe PL-1-010"} that are the lines of the "pipe PL-1" that is detected from the "plant diagram PD001" with the "unified line S-PL-1, generates a "line change history S-PD001-CH" that includes the identification information and the location information on the unified lines, and stores the line change history in the line unification information storage unit 14j that corresponds to the "plant administrator PO001".

### 2-2-2-6. Providing unit 15f

The providing unit 15f provides various kinds of information. Meanwhile, the providing unit 15f may refer to various kinds of information that are stored in the storage unit 14. In the following, a line detection information transmission process, a line unification information transmission process, and a three-dimensional model construction process will be described.

### Line detection information transmission process

The providing unit 15f performs the line detection information transmission process. For example, the providing unit 15f transmits the line detection information that is the detection result related to the line that is detected by the detection unit 15d to the plant administrator terminal 20, and provides the line detection information to the plant administrator O.

As a specific example, the providing unit 15f transmits, as the line detection information, the line detection diagram, which is the plant diagram information on the "plant diagram PD001" in which all of the lines in the detected "pipe PL-1" are colored in blue and displayed in a highlighted manner, and the line detection list, which includes the identification information on{ "pipe PL-1-001", "pipe PL-1-002", ..., "pipe PL-1-010"} that are the lines of the detected "pipe PL-1", to the plant administrator terminal 20 of the plant administrator O who is identified by the "plant administrator PO001".

### Line unification information transmission process

The providing unit 15f performs the line unification information transmission process. For example, the providing unit 15f transmits the line unification information that is generated by the generation unit 15e to the plant administrator terminal 20, and provides the line unification information to the plant administrator O.

As a specific example, the providing unit 15f transmits, as the line unification information, a "line unified plant diagram L-PD001" that corresponds to the "plant diagram PD001", a "line unified plant diagram L-PD002" that corresponds to the "plant diagram PD002", and a "line unified plant diagram L-PD003" that corresponds to the "plant diagram PD003" to the plant administrator terminal 20 of the plant administrator O who is identified by the "plant administrator PO001". Further, the providing unit 15f transmits, as the line unification information, a "line change history L-PD001-CH" that corresponds to the "plant diagram PD001", a "line change history L-PD002-CH" that corresponds to the "plant diagram PD002", and a "line change history L-PD003-CH" that corresponds to the "plant diagram PD003" to the plant administrator terminal 20 of the plant administrator O who is identified by the "plant administrator PO001".

### Three-dimensional model construction process

The providing unit 15f performs the three-dimensional model construction process. For example, the providing unit 15f constructs a three-dimensional model of the plant by using the generated line unified plant diagram, and provides the three-dimensional model to the plant administrator O who is the user.

As a specific example, firstly, the providing unit 15f acquires the "line unified plant diagram L-PD001" in which all of the lines of the "pipe PL-1" included in the "plant diagram PD001" with the "unified line L-PL-1". Secondly, the providing unit 15f constructs, in a resource of the server apparatus 10-2, a three-dimensional model for realizing a digital twin that enables simulation of the plant by using the acquired "line unified plant diagram L-PD001" as input data. Thirdly, the providing unit 15f transmits a right of use of the constructed three-dimensional model to the plant administrator terminal 20 of the plant administrator O who is identified by the "plant administrator PO001".

### 2-2-2-7. Notification unit 15g

The notification unit 15g provides various kinds of information. Meanwhile, the notification unit 15g may refer to various kinds of information that are stored in the storage unit 14. In the following, a line output result acquisition process and a line detection error notification process will be described.

### Line output result acquisition process

The notification unit 15g performs the line output result acquisition process. The notification unit 15g acquires an output result by using a trained machine learning model that outputs a line that is included in the plant diagram in accordance with input of the digital data and the line pattern of the plant diagram.

As a specific example, the notification unit 15g inputs the plant diagram information on the "plant diagram PD001" and the line pattern of {thickness: "L-XXXX", line style: "solid line", size: "L-1010", color: "red", line angle: "180°", line number: "L-YYYY"} to the detection model DM of the detection model storage unit 14f, and acquires {"pipe PL-1-001", "pipe PL-1-002", ..., "pipe PL-1-006", "pipe PL-1-011"} that is an output result of the detection model DM.

### Line detection error notification process

The notification unit 15g performs the line detection error notification process. The notification unit 15g notifies the plant administrator O of a detection failure or false detection of a line by using the output result of the trained machine learning model.

As a specific example, the notification unit 15g compares { "pipe PL-1-001", "pipe PL-1-002", ..., "pipe PL-1-010"} that are the lines of the "pipe PL-1" that is detected by the detection unit 15d and {"pipe PL-1-001", "pipe PL-1-002", ..., "pipe PL-1-006", "pipe PL-1-011" that is the output result of the detection model DM, determines the possibility that there is a detection failure of the line of the "pipe PL-1" with the identification information of the "pipe PL-1-011", generates a message, such as "there is the possibility that there is a detection failure of the line", as line detection error information, and transmits the message to the plant administrator terminal 20 of the plant administrator O who is identified by the "plant administrator PO001".

### 2-3. Configuration example and process example of plant administrator terminal 20

A configuration example and a process example of the plant administrator terminal 20 will be described below with reference to FIG. 15. the plant administrator terminal 20 is a terminal that is used by the plant administrator O who manages a plant, and includes the input output unit 21, the control unit 22, and the communication unit 23.

### 2-3-1. Input output unit 21

The input output unit 21 controls input of various kinds of information to the plant administrator terminal 20. For example, the input output unit 21 is implemented by a mouse, a keyboard, a touch panel, or the like, and receives input of setting information or the like to the plant administrator terminal 20. Further, the input output unit 21 displays various kinds of information that are received from the plant administrator terminal 20. For example, the input output unit 21 is implemented by a display or the like, and displays various kinds of information that are stored in the plant administrator terminal 20.

The input output unit 21 displays a unified line definition screen that is viewed by the plant administrator O. Meanwhile, details of the unified line definition screen will be described later in the section of 2-3-4. First specific example of the display screen of the plant administrator terminal 20. Further, the input output unit 21 displays the plant diagram display screen that is viewed by the plant administrator O. Meanwhile, details of the plant diagram display screen will be described later in the section of 2-3-5. Second specific example of the display screen of the plant administrator terminal 20. Furthermore, the input output unit 21 displays a line selection screen that allows the plant administrator O to select a line. Meanwhile, details of the line selection screen will be described later in the section of 2-3-6. Third specific example of the display screen of the plant administrator terminal 20. Moreover, the input output unit 21 displays the unified plant diagram display screen that is viewed by the plant administrator O. Meanwhile, details of the unified plant diagram display screen will be described later in the section of 2-3-7. Fourth specific example of the display screen of the plant administrator terminal 20.

### 2-3-2. Control unit 22

The control unit 22 transmits various kinds of information. For example, the control unit 22 transmits the plant diagram information on the plant diagram that is selected by the plant administrator O to the server apparatus 10-2. Further, the control unit 22 transmits the line selection information on a line that is selected by the plant administrator O in the line selection screen to the server apparatus 10-2.

The control unit 22 receives various kinds of information. For example, the control unit 22 receives, from the server apparatus 10-2, the line detection information that includes the line detection diagram, the line detection list, or the like that is displayed by the input output unit 21. Further, the control unit 22 receives, from the server apparatus 10-2, the line unification information that includes the line unified plant diagram, the line change history, or the like that is displayed by the input output unit 21. Furthermore, the control unit 22 receives, from the server apparatus 10-2, the line detection error information that is displayed by the input output unit 21 and that notifies the plant administrator O of a detection failure or false detection of a line.

### 2-3-3. Communication unit 23

The communication unit 23 controls data communication with a different apparatus. For example, the communication unit 23 performs data communication with each of communication apparatuses via a router or the like. Further, the communication unit 23 is able to perform data communication with an operator terminal (not illustrated).

### 2-3-4. First specific example of display screen of plant administrator terminal 20

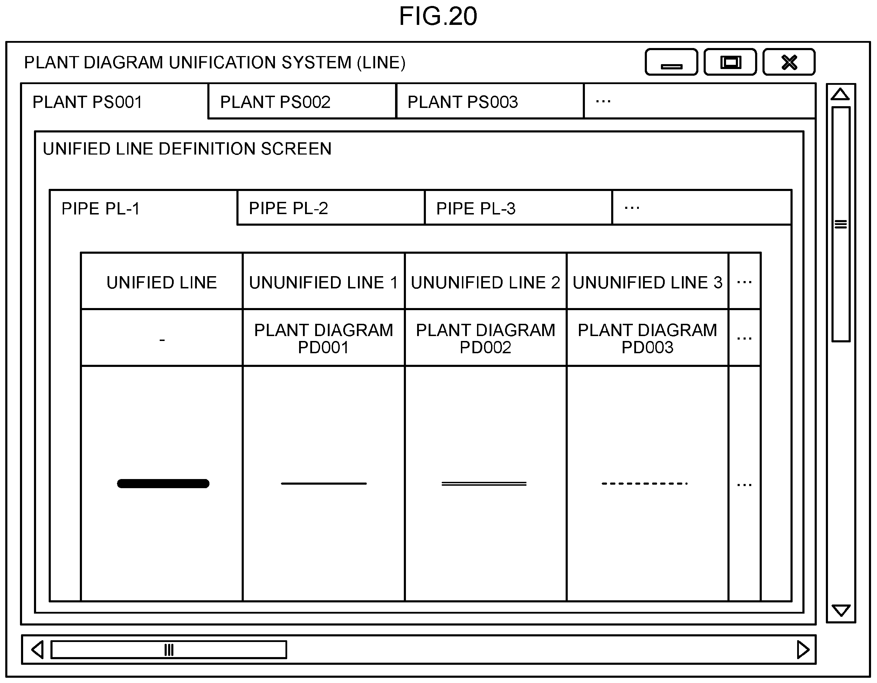

A first specific example of the display screen that is output by the input output unit 21 of the plant administrator terminal 20 will be described below with reference to FIG. 20. FIG. 20 is a diagram illustrating the first specific example of the display screen of the plant administrator terminal 20 according to the second embodiment. In the following, the unified line definition screen that is viewed by the plant administrator O will be described.

### 2-3-4-1. Unified line definition screen

As illustrated in the example illustrated in FIG. 20, the plant administrator terminal 20 displays, for each plant, the unified line definition screen for defining a unified line that unifies different display modes of lines of the same type. In the example illustrated in FIG. 20, in the plant diagram of the "plant PS001", the unified line definition screen for defining a unified line of the "pipe PL-1" is displayed.

### 2-3-4-2. Unified line

The plant administrator O designates the unified line in the unified line definition screen. For example, the plant administrator O designates the unified line by drawing the unified line of the "pipe PL-1" in the unified line definition screen. At this time, the plant administrator O may designate the unified line by selecting, in the unified line definition screen, the line of the "pipe PL-1" in an arbitrary plant diagram. Further, the plant administrator O may designate the unified line by inputting, to the unified line definition screen, information on the thickness, the line style, the size, the color, or the like of the line of the "pipe PL-1".

### 2-3-4-3. Ununified line

The plant administrator O designates the ununified line in the unified line definition screen. For example, the plant administrator O designates the ununified line by selecting, in the unified line definition screen, lines of the "pipe PL-1" in a plurality of plant diagrams. In the example illustrated in FIG. 20, the plant administrator O designates, in the unified line definition screen, the line of the "pipe PL-1" in the "plant diagram PD001" as an "ununified line 1", designates the line of the "pipe PL-1" in the "plant diagram PD002" as an "ununified line 2", and designates the line of the "pipe PL-1" in the "plant diagram PD003" as an "ununified line 3".

### 2-3-5. Second specific example of display screen of plant administrator terminal 20

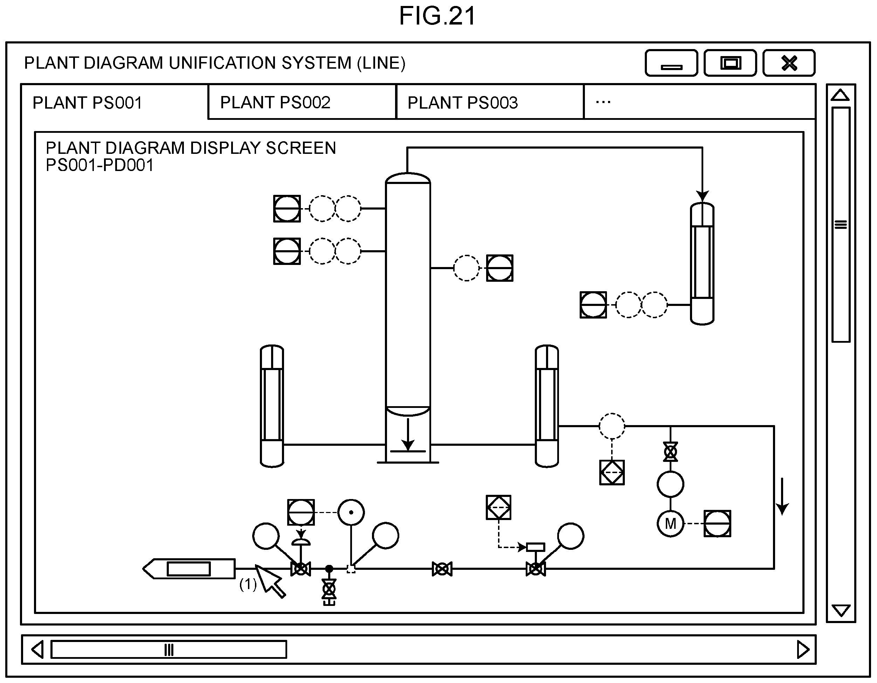

A second specific example of the display screen that is output by the input output unit 21 of the plant administrator terminal 20 will be described below with reference to FIG. 21. FIG. 21 is a diagram illustrating the second specific example of the display screen of the plant administrator terminal 20 according to the second embodiment. In the following, the plant diagram display screen that is viewed by the plant administrator O will be described.

### 2-3-5-1. Plant diagram display screen

As illustrated in an example in FIG. 21, the plant administrator terminal 20 displays, for each plant, a plant diagram that is generated with symbols that represent components of the plant and lines that represent connection components that connect the components of the plant. In the example illustrated in FIG. 21, in the plant diagram of the "plant PS001 ", an ununified line (see (1) in FIG. 21) of the "pipe PL-1" that is detected by the plant administrator O and that is to be unified.

### 2-3-5-2. Line display mode

The plant administrator terminal 20 is able to display, as the line display mode, a line with a different thickness, a different line style, a different size, a different color, or the like, a line with different orientation, a line to which a line number belongs, or the like. Further, the plant administrator terminal 20 may display, as the line display mode, a certain display form in which the line is displayed in a blinking manner or the color is changed in accordance with a change of time. Furthermore, the plant administrator terminal 20 may be able to display a plant diagram that represents a three-dimensional plant configuration, by drawing an anteroposterior relationship of lines.

### 2-3-6. Third specific example of display screen of plant administrator terminal 20

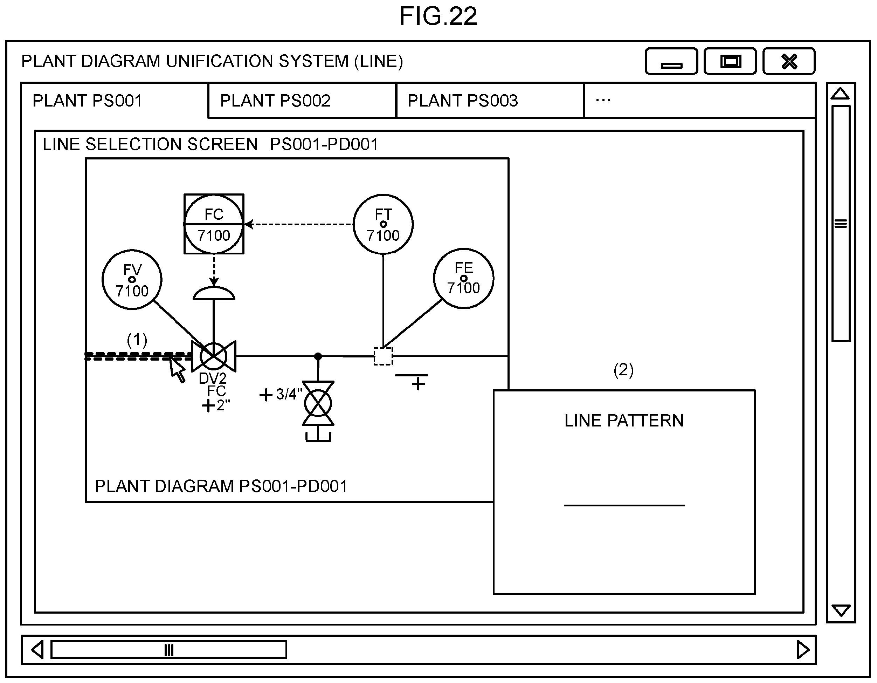

A third specific example of the display screen that is output by the input output unit 21 of the plant administrator terminal 20 will be described below with reference to FIG. 22. FIG. 22 is a diagram illustrating the third specific example of the display screen of the plant administrator terminal 20 according to the second embodiment. In the following, the line selection screen that allows the plant administrator O to select a line will be described the plant administrator O.

### 2-3-6-1. Line selection screen

As illustrated in an example in FIG. 22, the plant administrator terminal 20 displays the line selection screen that allows the plant administrator O to select an ununified line that is detected on the plant diagram and that is to be unified. In the example illustrated in FIG. 22, the plant administrator terminal 20 displays a plant diagram in which an area around an ununified line (see (1) in FIG. 22 (1)) of the pipe that is detected by the plant administrator O and that is to be unified in the plant diagram of the "plant PS001" is enlarged. At this time, the plant administrator O is able to select the ununified line by performing click operation on the ununified line that is detected and that is to be unified.

Further, the plant administrator terminal 20 displays a symbol pattern (see (2) in FIG. 22) in which the ununified line that is selected by the plant administrator O on the plant diagram is enlarged. At this time, the plant administrator O is able to modify a thickness or the like of the displayed line pattern or delete a line number that belongs to the line.

### 2-3-6-2. Designation of line detection condition

The plant administrator O is able to designate a detection condition for detecting the ununified line. For example, the plant administrator O is able to designate, as the detection condition, a matched condition with respect to any of the thickness, the line style, the size, and the color that are the line patterns, orientation of the line, presence or absence of a line number that belongs to the line, the display form of the line, or the like.

### 2-3-7. Fourth specific example of display screen of plant administrator terminal 20

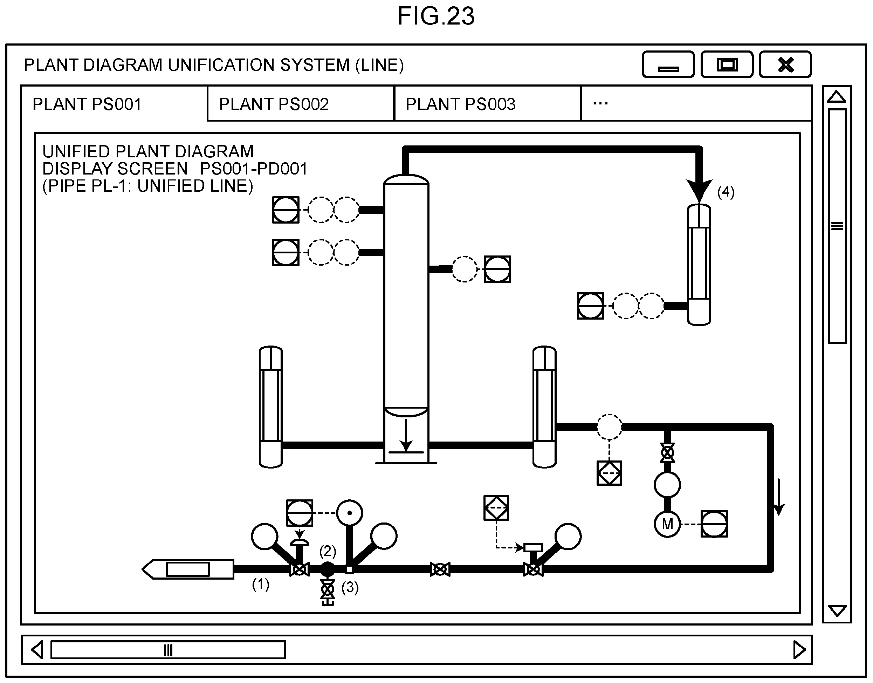

A fourth specific example of the display screen that is output by the input output unit 21 of the plant administrator terminal 20 will be described below with reference to FIG. 23. FIG. 23 is a diagram illustrating the fourth specific example of the display screen of the plant administrator terminal 20 according to the second embodiment. In the following, the unified plant diagram display diagram that is viewed by the plant administrator O will be described.

### 2-3-7-1. Unified plant diagram display diagram

As illustrated in an example in FIG. 23, the plant administrator terminal 20 replaces a detected ununified line with a unified line and displays a unified plant diagram in which the line is unified. In the example illustrated in FIG. 23, the plant administrator terminal 20 displays the unified plant diagram (see (1) in FIG. 23) in which an ununified line of the detected control device is replaced with a unified line in the plant diagram of the "plant PS001 ".

### 2-3-7-2. Adjustment of unified plant diagram

The plant administrator terminal 20 is able to display the unified plant diagram in which display positions of the replaced unified lines are adjusted. **In** the example illustrated in FIG. 23, the plant administrator terminal 20 displays the unified plant diagram in which display positions of a different symbol and an arrow and a size of a line that are connected to the line indicated by (1) in FIG. 23 (1) are adjusted (see (2) to (4) in FIG. 23).

### 2-3-7-3. Line change history

The plant administrator terminal 20 is able to display the line change history as a history of replacement of the ununified lines with the unified lines. **In** the example illustrated in FIG. 23, the plant administrator terminal 20 is able to display the line change history as a list of identification information or location information on lines, with respect to the ununified lines of the detected pipes that are replaced with the unified lines in the plant diagram of the "plant PS001".

### 2-3-7-4. Detection error notification

The plant administrator terminal 20 is able to display a detection error notification that indicates the possibility that there is a detection failure or false detection of the detected ununified line. For example, the plant administrator terminal 20 is able to display, as the detection error notification, a message of "there is the possibility that there is a detection failure of the line" or the like.

### 3. Flow of process performed by plant diagram unification system 100-2

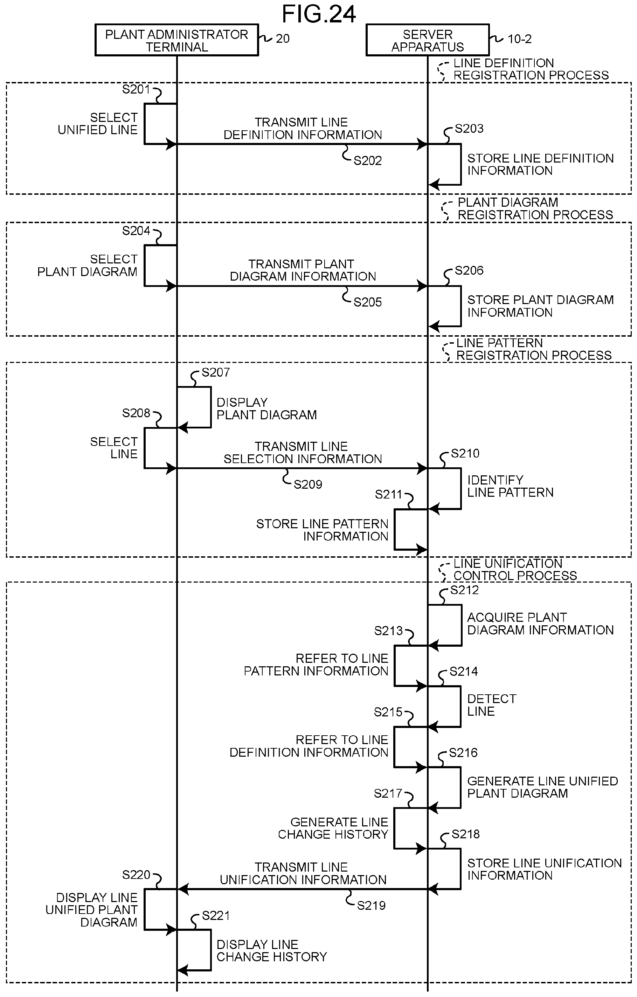

A flow of an entire process that is performed by the plant diagram unification system 100-2 according to the second embodiment will be described below with reference to FIG. 24. FIG. 24 is a sequence diagram illustrating an example of the flow of the entire process that is performed by the plant diagram unification system 100-2 according to the second embodiment. **In** the following, a line definition registration process, a plant diagram registration process, a line pattern registration process, and a line unification control process will be described. Meanwhile, processes from Step S201 to Step S221 below may be performed in a different order. Further, some of the processes from Step S201 to Step S221 may be omitted.

### 3-1. Line definition registration process

The plant diagram unification system 100-2 performs the line definition registration process that is represented by the processes from Step S201 to Step S203 below.

Firstly, the plant administrator terminal 20 performs a unified line selection process (Step S201). For example, the plant administrator terminal 20 receives a unified line and an ununified line that are selected by operation performed by the plant administrator O. Secondly, the plant administrator terminal 20 performs a line definition information transmission process (Step S202). For example, the plant administrator terminal 20 transmits digital data of the unified line and the ununified line that are selected by operation performed by the plant administrator O to the server apparatus 10-2. Thirdly, the server apparatus 10-2 performs a line definition information storage process (Step S203). For example, the server apparatus 10-2 stores line definition information that is received from the plant administrator terminal 20, for each of the plant administrators O.

### 3-2. Plant diagram registration process

The plant diagram unification system 100-2 performs the plant diagram registration process that is represented by the processes from Step S204 to Step S206 below.

Firstly, the plant administrator terminal 20 performs a plant diagram selection process (Step S204). For example, the plant administrator terminal 20 receives a plant diagram of a plant that is selected by operation performed by the plant administrator O. Secondly, the plant administrator terminal 20 performs a plant diagram information transmission process (Step S205). For example, the plant administrator terminal 20 transmits digital data of the plant diagram of the plant that is selected by operation performed by the plant administrator O to the server apparatus 10-2. Thirdly, the server apparatus 10-2 performs a plant diagram information storage process (Step S206). For example, the server apparatus 10-2 stores plant diagram information that is received from the plant administrator terminal 20, for each of the plant administrators O.

### 3-3. Line pattern registration process

The plant diagram unification system 100-2 performs the line pattern registration process that is represented by the processes from Step S207 to Step S211 below.

Firstly, the plant administrator terminal 20 performs a plant diagram display process (Step S207). For example, the plant administrator terminal 20 displays, on the monitor screen, the plant diagram of the plant that is selected by operation performed by the plant administrator O. Secondly, the plant administrator terminal 20 performs a line selection process (Step S208). For example, the plant administrator terminal 20 receives a line that is selected on the plant diagram by operation performed by the plant administrator O. Thirdly, the plant administrator terminal 20 performs a line selection information transmission process (Step S209). For example, the plant administrator terminal 20 transmits, to the server apparatus 10-2, identification information on the line that is selected by operation performed by the plant administrator or location information on the plant diagram. Fourthly, the server apparatus 10-2 performs a line pattern identification process (Step S210). For example, the server apparatus 10-2 refers to the plant diagram information based on the line selection information that is received from the plant administrator terminal 20, and identifies a line pattern from the digital data of the plant diagram information the plant diagram information. Fifthly, the server apparatus 10-2 performs a line pattern information storage process (Step S211). For example, the server apparatus 10-2 stores the line pattern information that includes the identified line pattern, for each of the plant administrators O.

### 3-4. Line unification control process

The plant diagram unification system 100-2 performs the line unification control process that is represented by the processes from Step S212 to Step S221 below.

Firstly, the server apparatus 10-2 performs a plant diagram information acquisition process (Step S212). For example, the server apparatus 10-2 receives a request for generation of line unification information by operation performed by the plant administrator O, searches through the stored plant diagram information, and acquires the plant diagram information on a corresponding plant. Secondly, the server apparatus 10-2 performs a line pattern information reference process (Step S213). For example, the server apparatus 10-2 receives a request for detection of a line by operation performed by the plant administrator O, searches through the stored line pattern information, and acquires the line pattern information on a corresponding line. Thirdly, the server apparatus 10-2 performs a line detection process (Step S214). For example, the server apparatus 10-2 searches through the acquired plant diagram information, and detects a line that coincides with the line pattern of the acquired line pattern information. Fourthly, the server apparatus 10-2 performs a line definition information reference process (Step S215). For example, the server apparatus 10-2 searches through the stored line definition information, and refers to the line definition information on a corresponding line. Fifthly, the server apparatus 10-2 performs a line unified plant diagram generation process (Step S216). For example, the server apparatus 10-2 replaces an ununified line among the detected lines with a unified line and generates the line unified plant diagram in which lines are unified. Sixthly, the server apparatus 10-2 performs a line change history generation process (Step S217). For example, the server apparatus 10-2 generates the line change history that represents a history of replacement of an ununified line with a unified line. Seventhly, the server apparatus 10-2 performs a line unification information storage process (Step S218). For example, the server apparatus 10-2 stores the line unification information that includes the generated line unified plant diagram and the generated line change history, for each of the plant administrators O. Eighthly, the server apparatus 10-2 performs the line unification information transmission process (Step S219). For example, the server apparatus 10-2 transmits the line unification information that includes the generated line unified plant diagram and the generated line change history to the plant administrator terminal 20. Ninthly, the plant administrator terminal 20 performs a line unified plant diagram display process (Step S220). For example, the plant administrator terminal 20 displays, on the monitor screen, the line unified plant diagram that is included in the line unification information that is received from the server apparatus 10-2. Tenthly, the plant administrator terminal 20 performs a line change history display process (Step S221). For example, the plant administrator terminal 20 displays, on the monitor screen, the line change history that is included in the line unification information that is received from the server apparatus 10-2.

### 4. Effects of second embodiment

Lastly, effects of the second embodiment will be described. **In** the following, first to ninth effects corresponding to the processes according to the second embodiment will be described.

### 4-1. First effect

Firstly, in one process according to the second embodiment as described above, the server apparatus 10-2 defines a unified lines that unifies different display modes of lines of the same type, acquires a plant diagram that is used for construction, operation, and maintenance of a plant, detects a line that is included in the acquired plant diagram, replaces a detected line with the unified line, and generates a line unified diagram in which the display modes of the lines of the same type are unified. Therefore, in one process according to the second embodiment, it is possible to easily unify lines that are displayed in the plant diagram.

### 4-2. Second effect

Secondly, in one process according to the second embodiment as described above, the server apparatus 10-2 receives, from the plant administrator terminal 20, a definition of the unified line for unifying, as the display mode of a line, a shape, a size, and a color of the line, and performs setting by associating a plurality of different display modes for each of the lines of the same type. Therefore, in one process according to the second embodiment, the plant administrator O designates the unified line, so that it is possible to easily unify the lines that are displayed in the plant diagram.

### 4-3. Third effect

Thirdly, in one process according to the second embodiment as described above, the server apparatus 10-2 adjusts a display position of the replaced unified line in the line unified diagram. Therefore, in one process according to the second embodiment, by adjusting deviation of the line that is caused by the replacement with the unified line, it is possible to easily unify the lines that are displayed in the plant diagram.

### 4-4. Fourth effect

Fourthly, in one process according to the second embodiment as described above, the server apparatus 10-2 generates a line change history of replacement of a detected line with the unified line. Therefore, in one process according to the second embodiment, it is possible to easily unify the lines that are displayed in the plant diagram, and it is possible to easily generate the line change history.

### 4-5. Fifth effect

Fifthly, in one process according to the second embodiment as described above, the server apparatus 10-2 constructs a three-dimensional model of the plant by using the generated line unified diagram, and provides the constructed three-dimensional model to the plant administrator O. Therefore, in one process according to the second embodiment, it is possible to easily unify the lines that are displayed in the plant diagram, and it is possible to improve accuracy of plant simulation.

### 4-6. Sixth effect

Sixthly, in one process according to the second embodiment as described above, the server apparatus 10-2 receives a selection of a desired line from among a plurality of lines that are included in the displayed plant diagram, registers a line pattern for which the selection is received, and detects, from the displayed plant diagram, all of lines that coincide with a display mode of the registered line pattern and that include the line for which the selection is received. Therefore, in one process according to the second embodiment, by efficiently detecting a line that coincides with the display mode of the line that is selected by the plant administrator O, it is possible to easily unify the lines that are displayed in the plant diagram.

### 4-7. Seventh effect

Seventhly, in one process according to the second embodiment as described above, the server apparatus 10-2 acquires, as the plant diagram, diagram data that includes a plurality of lines that are generated with digital data, receives a line that is selected by operation that is performed by the plant administrator O on the plant diagram that is displayed on the plant administrator terminal 20, identifies at least one of a thickness, a line style, a size, and a color of the line as the line pattern for which the selection is received, and detects all of lines that coincide with the line pattern from among the plurality of lines that are included in the plant diagram. Therefore, in one process according to the second embodiment, by efficiently detecting a line that coincides with the thickness, the line style, the size, the color, or the like of the line that is selected by the plant administrator O, it is possible to easily unify the lines that are displayed in the plant diagram.

### 4-8. Eighth effect

Eighthly, in one process according to the second embodiment as described above, the server apparatus 10-2 further identifies orientation of the line for which the selection is received, and detect all of lines that coincide with the orientation of the line from among the plurality of lines that are included in the plant diagram. Therefore, in one process according to the second embodiment, by efficiently detecting a line that coincides with the thickness, the line style, the size, the color, or the like of the line that is selected by the plant administrator O, it is possible to easily unify the lines that are displayed in the plant diagram.

### 4-9. Ninth effect

Ninthly, in one process according to the second embodiment as described above, the server apparatus 10-2 further identifies a line number that belongs to the line for which the selection is received, and detects all of lines that coincide with the line number from among the plurality of lines that are included in the plant diagram. Therefore, in one process according to the second embodiment, by efficiently detecting a line that coincides with the thickness, the line style, the size, the color, or the like of the line that is selected by the plant administrator O and that further coincides with the line number that belongs to the line, it is possible to easily unify the lines that are displayed in the plant diagram.

### System

The processing procedures, control procedures, specific names, and information including various kinds of data and parameters illustrated in the above-described document and drawings may be arbitrarily changed unless otherwise specified.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions.

Moreover, all or an arbitrary part of various kinds of processing functions that are implemented by the apparatuses may be realized by a CPU or a program that is analyzed and executed by the CPU, or may be realized by hardware using wired logic.

### Hardware

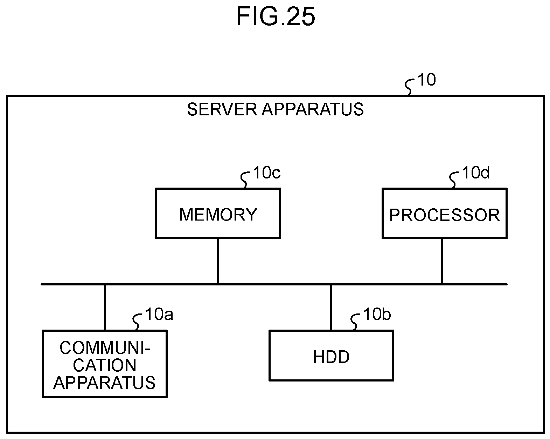

A hardware configuration example of the server apparatus 10 (10-1, 10-2) will be described below with reference to FIG. 25. FIG. 25 is a diagram illustrating a hardware configuration example according to one embodiment. As illustrated in FIG. 25, the server apparatus 10 includes a communication apparatus 10a, a Hard Disk Drive (HDD) 10b, a memory 10c, and a processor 10d. Further, all of units illustrated in FIG. 25 are connected to one another via a bus or the like.

The communication apparatus 10a is a network interface card or the like and performs communication with a different server apparatus. The HDD 10b stores therein a program and various kinds of information that implement the functions illustrated in FIG. 2 and FIG. 15.

The processor 10d reads a program that executes the same process as that of each of the processing units illustrated in FIG. 2 and FIG. 15 from the HDD 10b or the like, loads the program onto the memory 10c, and operates the process that implements each of the functions illustrated in FIG. 2 and FIG. 15. For example, the process executes the same function as that of each of the processing units included in the server apparatus 10. Specifically, the processor 10d reads programs that have the same functions as those of the definition unit 15a, the acquisition unit 15b, the reception unit 15c, the detection unit 15d, the generation unit 15e, the providing unit 15f, the notification unit 15g and the like from the HDD 10b or the like. Further, the processor 10d performs a process that executes the same processes as those of the definition unit 15a, the acquisition unit 15b, the reception unit 15c, the detection unit 15d, the generation unit 15e, the providing unit 15f, the notification unit 15g, and the like.

In this manner, the server apparatus 10 (10-1, 10-2) operates as an apparatus that implements various kinds of processing methods by reading and executing a program. Further, the server apparatus 10 (10-1, 10-2) is able to implement the same functions as those of one embodiment as described above by causing a medium reading apparatus to read the above-described program from a recording medium and execute the read program. Meanwhile, the program as described above need not always be executed by the server apparatus 10 (10-1, 10-2). For example, the present invention may be applied in the same manner even when a different computer or a different server apparatus executes the above-described program or the different computer and the different server apparatus execute the above-described program in a cooperative manner.

The program may be distributed via a network, such as the Internet. Further, the program may be recorded in a computer readable recording medium, such as a hard disk, a flexible disk (FD), a compact disc (CD)-ROM, a Magneto-Optical disk (MO), or a Digital Versatile Disk (DVD), and may be executed by being read from the recording medium by a computer.

According to one aspect of the present invention, it is possible to easily unify objects that are displayed in a plant diagram.

## Claims

1. A plant diagram unification system (100-1, 100-2) comprising:
a definition unit (15a) that defines a unified object that unifies different display modes of objects of same type;
an acquisition unit (15b) that acquires a diagram that is used for construction, operation, and maintenance of a plant;
a detection unit (15d) that detects an object that is included in the diagram; and
a generation unit (15e) that replaces a detected object with the unified object, and generates an object unified diagram in which the display modes of the objects of the same type are unified.

2. The plant diagram unification system (100-1, 100-2) according to claim 1, wherein the definition unit (15a) receives a definition of the unified object for unifying, as a display mode of an object, a shape, a size, and a color of the object, performs setting by associating a plurality of different display modes for each of the objects of the same type.

3. The plant diagram unification system (100-1, 100-2) according to claim 1 or 2, wherein the generation unit adjusts a display position of the replaced unified object in the object unified diagram.

4. The plant diagram unification system (100-1, 100-2) according to any one of claims 1 to 3, wherein the generation unit (15e) generates a history of replacement of a detected object with the unified object.

5. The plant diagram unification system (100-1, 100-2) according to any one of claims 1 to 4, further comprising:
a providing unit (15f) that constructs a three-dimensional model of the plant by using the generated object unified diagram, and provides the constructed three-dimensional model to a user.

6. The plant diagram unification system (100-1) according to any one of claims 1 to 5, wherein
the object is a symbol,
the plant diagram unification system (100-1) further comprising:
a reception unit (15c) that receives a selection of a desired symbol from among a plurality of symbols that are included in the displayed diagram, and registers a pattern of the symbol for which the selection is received, wherein
the detection unit (15d) detects, from the displayed diagram, all of symbols that coincide with a display mode of the registered pattern of the symbol and that include the symbol for which the selection is received.

7. The plant diagram unification system (100-1) according to claim 6, wherein
the acquisition unit (15b) acquires, as the diagram, diagram data that includes a plurality of symbols that are generated with digital data,
the reception unit (15c) receives a symbol that is selected by operation that is performed by a user on the diagram that is displayed on a user terminal, and
the detection unit (15d) identifies at least one of a shape, a line style, a size, and a color of a symbol, as the pattern of the symbol for which the selection is received, and detects all of symbols that coincide with the pattern of the symbol from among the plurality of symbols that are included in the diagram.

8. The plant diagram unification system (100-1) according to claim 6 or 7, wherein the detection unit further identifies orientation of the symbol for which the selection is received, and detects all of symbols that coincide with the orientation from among the plurality of symbols that are included in the diagram.

9. The plant diagram unification system (100-1) according to any one of claims 6 to 8, wherein the detection unit (15d) further identifies text that belongs to the symbol for which the selection is received, and detects all of symbols that coincide with the text from among the plurality of symbols that are included in the diagram.

10. The plant diagram unification system (100-2) according to any one of claims 1 to 5, wherein
the object is a line,
the plant diagram unification system (100-2) further comprising:
a reception unit (15c) that receives a selection of a desired line from among a plurality of lines that are included in the displayed diagram, and registers a pattern of the line for which the selection is received, wherein
the detection unit (15d) detects, from the displayed diagram, all of lines that coincide with a display mode of the registered pattern of the line and that include the line for which the selection is received.

11. The plant diagram unification system (100-2) according to claim 10, wherein
the acquisition unit (15b) acquires, as the diagram, diagram data that includes a plurality of lines that are generated with digital data,
the reception unit (15c) receives a line that is selected by operation that is performed by a user on the diagram that is displayed on a user terminal, and
the detection unit (15d) identifies at least one of a thickness, a line style, a size, and a color of a line, as the pattern of the line for which the selection is received, and detects all of lines that coincide with the pattern of the line from among the plurality of lines that are included in the diagram.

12. The plant diagram unification system (100-2) according to claim 10 or 11, wherein the detection unit (15d) further identifies orientation of the line for which the selection is received, and detects all of lines that coincide with the orientation from among the plurality of lines that are included in the diagram.

13. The plant diagram unification system (100-2) according to any one of claims 10 to 12, wherein the detection unit (15d) further identifies a line number that belongs to the line for which the selection is received, and detects all of lines that coincide with the line number from among the plurality of lines that are included in the diagram.

14. A plant diagram unification method that is implemented by a computer (10), the plant diagram unification method comprising:
defining a unified object that unifies different display modes of objects of same type;
acquiring a diagram that is used for construction, operation, and maintenance of a plant;
detecting an object that is included in the diagram;
replacing a detected object with the unified object; and
generating an object unified diagram in which the display modes of the objects of the same type are unified.

15. A plant diagram unification program that causes a computer (10) to execute a process, the process comprising:
defining a unified object that unifies different display modes of objects of same type;
acquiring a diagram that is used for construction, operation, and maintenance of a plant;
detecting an object that is included in the diagram;
replacing a detected object with the unified object; and
generating an object unified diagram in which the display modes of the objects of the same type are unified.
